# EUROPEAN PATENT APPLICATION

(11) **EP 4 207 664 A1**
(43) Date of publication of application: **05.07.2023**
(21) Application number: 22804068.9
(22) Date of filing: 20.05.2022
(51) Int. Cl.: H04L 5/00

(54) **DATA TRANSMISSION METHOD, COMMUNICATION APPARATUS, COMPUTER-READABLE STORAGE MEDIUM AND CHIP**

(30) Priority: 20.05.2021 CN 202110552404; 21.05.2021 CN 202110559186; 03.06.2021 CN 202110621403
(60) Divisional application: 23166574.6
(71) Applicant: Huawei Technologies Co., Ltd., Shenzhen, Guangdong 518129 (CN)
(72) Inventor: GAN, Ming, Shenzhen, Guangdong 518129 (CN); HUANG, Guogang, Shenzhen, Guangdong 518129 (CN); LU, Yuxin, Shenzhen, Guangdong 518129 (CN); LI, Yiqing, Shenzhen, Guangdong 518129 (CN); GUO, Yuchen, Shenzhen, Guangdong 518129 (CN); LIU, Chenchen, Shenzhen, Guangdong 518129 (CN)
(74) Representative: Gill Jennings & Every LLP
(86) International application number: PCT/CN2022/094122
(87) International publication number: WO 2022/242749

(57) **Abstract**

Embodiments of this disclosure provide a data transmission method, a communication apparatus, a computer-readable storage medium, and a chip. The method includes: generating, by a first multi-link device, a management frame, where the management frame includes a receiver address, a transmitter address, and link indication information, and the link indication information indicates that the management frame is applied to at least one link corresponding to the link indication information; and sending the management frame to a second multi-link device on a link on which a station indicated by the receiver address or a station indicated by the transmitter address operates. In this way, in embodiments of this disclosure, the management frame may include the link indication information, to indicate a link to which the management frame is applied, so that cross-link transmission of the management frame can be implemented, and the second multi-link device can apply the management frame to a correct link. This avoids a processing error.

## Description

### TECHNICAL FIELD

This disclosure relates to the communication field, and more specifically, to a data transmission method, a communication apparatus, a computer-readable storage medium, and a chip.

### BACKGROUND

A multi-link device (Multi-link Device, MLD) has a plurality of radio frequency modules, and may operate on a plurality of different frequency bands or channels.

For communication between multi-link devices, a management frame may be transmitted on a link between a station with which a multi-link device is affiliated and a station with which another multi-link device is affiliated. However, in a current solution, a multi-link feature cannot be fully used, resulting in low transmission efficiency.

### SUMMARY

Example embodiments of this disclosure provide a management frame mechanism for cross-link transmission, to fully use resources based on a multi-link feature.

According to a first aspect, a data transmission method is provided. The method includes: A first multi-link device generates a management frame, where the management frame includes a receiver address, a transmitter address, and link indication information, and the link indication information indicates that the management frame is applied to at least one link corresponding to the link indication information; and the first multi-link device sends the management frame on a link on which a station indicated by the receiver address or a station indicated by the transmitter address operates. In this way, in this embodiment of this disclosure, the management frame may include the link indication information, to indicate a link to which the management frame is applied, so that cross-link transmission of the management frame can be implemented, and a device that receives the management frame can apply the management frame to a correct link. This avoids a processing error. The device that receives the management frame may be a second multi-link device or a second single-link station.

In some embodiments of the first aspect, the link indication information includes a first address, and the first address includes address indication information. In an implementation, the address indication information indicates whether the first address is an MLD MAC address of an access point AP MLD or an MAC address of an AP. In another implementation, the address indication information indicates whether the management frame is an MLD-level management frame or a link-level management frame.

In an implementation, the MAC address of the AP is an MAC address of an AP affiliated with the AP MLD.

In another implementation, the MAC address of the AP is an MAC address of a single-link AP or an MAC address of an AP not affiliated with any AP MLD.

In this way, in this embodiment of this disclosure, the address indication information indicates whether the first address is the MLD MAC address of the AP MLD or the MAC address of the AP affiliated with the AP MLD. This solution is applicable even if an MAC address of an MLD is the same as an MAC address of an affiliated station. This solution is more universal, and can reduce signaling overheads.

In some embodiments of the first aspect, the address indication information is carried in an individual/group I/G bit of an MAC address in an address 3 field of the management frame.

In this way, in this embodiment of this disclosure, the address indication information may be carried in the I/G bit of the address 3 field. This can effectively use resources.

In some embodiments of the first aspect, the link indication information includes the address indication information and the first address. The address indication information indicates whether the first address is the MLD MAC address of the AP MLD or the MAC address of the AP.

In still another implementation of the first aspect, the first address of the management frame is always set to the MAC address of the AP. The MAC address of the AP is an MAC address of an AP affiliated with the AP MLD, or an MAC address of a single-link AP, or an MAC address of an AP not affiliated with any AP MLD. In this case, the address indication information does not need to indicate which address the first address is. Optionally, the address indication information may indicate whether the management frame is an MLD-level management frame or a link-level management frame.

The MAC address of the AP is the MAC address of the AP affiliated with the AP MLD, or the MAC address of the single-link AP, or the MAC address of the AP not affiliated with any AP MLD.

In some embodiments of the first aspect, the address indication information is carried in an I/G bit of an MAC address in an address 2 field of the management frame.

In some embodiments of the first aspect, the address indication information is a first value, and the first address is the MLD MAC address of the AP MLD.

In some embodiments of the first aspect, the link indication information further includes link identifier information, and the link identifier information indicates that the management frame is applied to one or more links.

In some embodiments of the first aspect, the link indication information further includes link identifier information, the link identifier information is carried in a first element of the management frame, and the link identifier information indicates that the first element is applied to one or more links.

In this way, in this embodiment of this disclosure, all or some of the links may be indicated by the link identifier information. This expands an application scope and ensures communication performance.

In some embodiments of the first aspect, a second element of the management frame does not carry link identifier information, indicating that the second element is applied to all links that establish an association between the first multi-link device and the second multi-link device.

In this way, in this embodiment of this disclosure, the management frame is applied to all links without carrying the link identifier information. This reduces signaling overheads, and improves communication efficiency.

In some embodiments of the first aspect, the link identifier information includes at least one of the following: one or more link identifiers or a link identifier bitmap.

In some embodiments of the first aspect, the address indication information is a second value, the first address is the MAC address of the AP affiliated with the AP MLD, and the management frame is applied to a link on which the affiliated AP operates.

In some embodiments of the first aspect, the address indication information is a second value, the first address is the MAC address of the single-link AP or the MAC address of the AP not affiliated with any AP MLD, and the management frame is applied to a link on which the AP operates.

In this way, in this embodiment of this disclosure, the management frame may be transmitted across links, so that a multi-link feature can be fully used to effectively use resources. This improves resource usage, and further improves communication efficiency.

In some embodiments of the first aspect, the generating a management frame includes: constructing additional authentication data AAD, where the AAD includes the receiver address, the transmitter address, and a second address; generating message integrity check MIC based on the AAD; and generating the management frame based on the MIC.

In some embodiments of the first aspect, the second address is the same as the first address.

In some embodiments of the first aspect, the first address includes the address indication information, and the second address is obtained by masking the address indication information in the first address to 0.

In some embodiments of the first aspect, the receiver address is carried in an address 1 field of the management frame, and the transmitter address is carried in the address 2 field of the management frame.

According to a second aspect, a data transmission method is provided. The method includes: A second multi-link device receives a management frame from a first multi-link device on a link on which a station in the second multi-link device operates, where the management frame includes a receiver address, a transmitter address, and link indication information, the receiver address is an address of the station in the second multi-link device, and the link indication information indicates that the management frame is applied to at least one link corresponding to the link indication information; and the second multi-link device applies the management frame to the at least one corresponding link based on the link indication information.

In some embodiments of the second aspect, the link indication information includes a first address, and the first address includes address indication information. In an implementation, the address indication information indicates whether the first address is an MLD MAC address of an access point AP MLD or an MAC address of an AP. The MAC address of the AP may be an MAC address of an AP affiliated with the AP MLD. Alternatively, in another implementation, the address indication information indicates whether the management frame is an MLD-level management frame or a link-level management frame.

In some embodiments of the second aspect, that the address indication information is carried in an individual/group I/G bit of an MAC address in an address 3 field of the management frame further includes: The second multi-link device masks the I/G bit in the address 3 field of the management frame to 0, to obtain the first address in the address 3 field of the management frame.

In some embodiments of the second aspect, the link indication information includes address indication information and a first address, and the address indication information indicates whether the first address is an MLD MAC address of an AP MLD or an MAC address of an AP. The MAC address of the AP may be an MAC address of an AP affiliated with the AP MLD.

In still another implementation of the second aspect, the first address of the management frame is always set to the MAC address of the AP. The MAC address of the AP is an MAC address of an AP affiliated with the AP MLD, or an MAC address of a single-link AP, or an MAC address of an AP not affiliated with any AP MLD. In this case, the address indication information does not need to indicate which address the first address is. Optionally, the address indication information may indicate whether the management frame is an MLD-level management frame or a link-level management frame. In other words, the address indication information may indicate whether the management frame includes the link indication information.

The MAC address of the AP is the MAC address of the AP affiliated with the AP MLD, or the MAC address of the single-link AP, or the MAC address of the AP not affiliated with any AP MLD.

In some embodiments of the second aspect, that the address indication information is carried in an I/G bit of an MAC address in an address 2 field of the management frame further includes: masking the I/G bit in the address 2 field of the management frame to 0, to obtain the transmitter address in the address 2 field of the management frame.

In some embodiments of the second aspect, the address indication information is a first value, the first address is not all 1s, and the first address is the MLD MAC address of the AP MLD.

In some embodiments of the second aspect, the applying the management frame to the at least one corresponding link includes: if the link indication information does not include link identifier information, applying the management frame to all links that establish an association between the first multi-link device and the second multi-link device; or if the link indication information includes link identifier information, applying the management frame to one or more links indicated by the link identifier information.

In some embodiments of the second aspect, the applying the management frame to the at least one corresponding link includes: if the link indication information further includes link identifier information, and the link identifier information is carried in a first element of the management frame, applying the first element to one or more links indicated by the link identifier information.

In some embodiments of the second aspect, the applying the management frame to the at least one corresponding link includes: if a second element of the management frame does not carry link identifier information, applying the second element to all links that establish an association between the first multi-link device and the second multi-link device.

In some embodiments of the second aspect, the link identifier information includes at least one of the following: one or more link identifiers or a link identifier bitmap.

In some embodiments of the second aspect, the address indication information is a second value, the first address is not all 1s, the first address is the MAC address of the AP, and the MAC address of the AP may be the MAC address of the AP affiliated with the AP MLD. In addition, the applying the management frame to the at least one corresponding link includes: applying the management frame to a link on which the AP operates, and specifically a link on which an AP affiliated with the AP MLD operates.

In some embodiments of the second aspect, the management frame further includes first message integrity check MIC. The method further includes: constructing additional authentication data AAD, where the AAD includes the receiver address, the transmitter address, and a second address; generating second MIC based on the AAD; and performing security verification on the management frame based on the first MIC and the second MIC.

In some embodiments of the second aspect, the second address is the same as the first address.

In some embodiments of the second aspect, the first address includes the address indication information, and the second address is obtained by masking the address indication information in the first address to 0.

In some embodiments of the second aspect, the management frame further includes a first address. All bits of the first address are 1s. The method further includes: The second multi-link device determines that the first address is a wildcard basic service set identifier BSSID.

In some embodiments of the second aspect, the receiver address is carried in an address 1 field of the management frame, and the transmitter address is carried in the address 2 field of the management frame.

According to a third aspect, a communication apparatus is provided. The apparatus includes: a generation unit, configured to generate a management frame, where the management frame includes a receiver address, a transmitter address, and link indication information, and the link indication information indicates that the management frame is applied to at least one link corresponding to the link indication information; and a sending unit, configured to send the management frame on a link on which a station indicated by the receiver address or a station indicated by the transmitter address operates.

In some embodiments of the third aspect, the link indication information includes a first address. The first address includes address indication information. The address indication information indicates whether the first address is an MLD MAC address of an access point AP MLD or an MAC address of an AP. Alternatively, the address indication information indicates whether the management frame is an MLD-level management frame or a link-level management frame.

The MAC address of the AP is an MAC address of an AP affiliated with the AP MLD, or an MAC address of a single-link AP, or an MAC address of an AP not affiliated with any AP MLD.

In some embodiments of the third aspect, the address indication information is carried in an individual/group I/G bit of an MAC address in an address 3 field of the management frame.

In some embodiments of the third aspect, the link indication information includes address indication information and a first address. In an implementation, the address indication information indicates whether the first address is an MLD MAC address of an AP MLD or an MAC address of an AP. The MAC address of the AP is an MAC address of an AP affiliated with the AP MLD, or an MAC address of a single-link AP, or an MAC address of an AP not affiliated with any AP MLD.

In another implementation, the first address of the management frame is always set to the MAC address of the AP. The MAC address of the AP is an MAC address of an AP affiliated with the AP MLD, or an MAC address of a single-link AP, or an MAC address of an AP not affiliated with any AP MLD. In this case, the address indication information does not need to indicate which address the first address is. Optionally, the address indication information may indicate whether the management frame is an MLD-level management frame or a link-level management frame. In other words, the address indication information may indicate whether the management frame includes the link indication information.

In some embodiments of the third aspect, the address indication information is carried in an I/G bit of an MAC address in an address 2 field of the management frame.

In some embodiments of the third aspect, the address indication information is a first value, and the first address is the MLD MAC address of the AP MLD.

In some embodiments of the third aspect, the link indication information further includes link identifier information, and the link identifier information indicates that the management frame is applied to one or more links.

In some embodiments of the third aspect, the link indication information further includes link identifier information, the link identifier information is carried in a first element of the management frame, and the link identifier information indicates that the first element is applied to one or more links.

In some embodiments of the third aspect, a second element of the management frame does not carry link identifier information, indicating that the second element is applied to all links that establish an association between the first multi-link device and the second multi-link device.

In some embodiments of the third aspect, the link identifier information includes at least one of the following: one or more link identifiers or a link identifier bitmap.

In some embodiments of the third aspect, the address indication information is a second value, the first address is the MAC address of the AP, and the management frame is applied to a link on which the AP operates.

In an implementation, the MAC address of the AP is the MAC address of the AP affiliated with the AP MLD.

In another implementation, the MAC address of the AP is an MAC address of a single-link AP or an MAC address of an AP not affiliated with any AP MLD.

In some embodiments of the third aspect, the generation unit is configured to: construct additional authentication data AAD, where the AAD includes the receiver address, the transmitter address, and a second address; generate message integrity check MIC based on the AAD; and generate the management frame based on the MIC.

In some embodiments of the third aspect, the second address is the same as the first address.

In some embodiments of the third aspect, the first address includes the address indication information, and the second address is obtained by masking the address indication information in the first address to 0.

In some embodiments of the third aspect, the receiver address is carried in an address 1 field of the management frame, and the transmitter address is carried in the address 2 field of the management frame.

According to a fourth aspect, a communication apparatus is provided. The apparatus includes: a receiving unit, configured to receive a management frame from a first multi-link device on a link on which a station in the communication apparatus operates, where the management frame includes a receiver address, a transmitter address, and link indication information, the receiver address is an address of the station in the communication apparatus, and the link indication information indicates that the management frame is applied to at least one link corresponding to the link indication information; and a processing unit, configured to apply the management frame to the at least one corresponding link based on the link indication information.

In some embodiments of the fourth aspect, the link indication information includes a first address, and the first address includes address indication information. In an implementation, the address indication information indicates whether the first address is an MLD MAC address of an access point AP MLD or an MAC address of an AP. In another implementation, the address indication information indicates whether the management frame is an MLD-level management frame or a link-level management frame.

The MAC address of the AP is an MAC address of an AP affiliated with the AP MLD, or an MAC address of a single-link AP, or an MAC address of an AP not affiliated with any AP MLD.

In some embodiments of the fourth aspect, the address indication information is carried in an individual/group I/G bit of an MAC address in an address 3 field of the management frame. The processing unit is further configured to mask the I/G bit in the address 3 field of the management frame to 0, to obtain the first address in the address 3 field of the management frame.

In some embodiments of the fourth aspect, the link indication information includes address indication information and a first address, and the address indication information indicates whether the first address is an MLD MAC address of an AP MLD or an MAC address of an AP. The MAC address of the AP is an MAC address of an AP affiliated with the AP MLD, or an MAC address of a single-link AP, or an MAC address of an AP not affiliated with any AP MLD.

In another implementation of the fourth aspect, the first address of the management frame is always set to the MAC address of the AP. The MAC address of the AP is an MAC address of an AP affiliated with the AP MLD, or an MAC address of a single-link AP, or an MAC address of an AP not affiliated with any AP MLD. In this case, the address indication information does not need to indicate which address the first address is. Optionally, the address indication information may indicate whether the management frame is an MLD-level management frame or a link-level management frame. In other words, the address indication information may indicate whether the management frame includes the link indication information. In some embodiments of the fourth aspect, the address indication information is carried in an I/G bit of an MAC address in an address 2 field of the management frame. The processing unit is further configured to mask the I/G bit in the address 2 field of the management frame to 0, to obtain the transmitter address in the address 2 field of the management frame.

In some embodiments of the fourth aspect, the address indication information is a first value, and the first address is the MLD MAC address of the AP MLD.

In some embodiments of the fourth aspect, the processing unit is configured to: if the link indication information does not include link identifier information, apply the management frame to all links that establish an association between the first multi-link device and the communication apparatus; or if the link indication information includes link identifier information, apply the management frame to one or more links indicated by the link identifier information.

In some embodiments of the fourth aspect, the processing unit is configured to: if the link indication information further includes link identifier information, and the link identifier information is carried in a first element of the management frame, apply the first element to one or more links indicated by the link identifier information.

In some embodiments of the fourth aspect, the processing unit is configured to: if a second element of the management frame does not carry link identifier information, apply the second element to all links that establish an association between the first multi-link device and the second multi-link device.

In some embodiments of the fourth aspect, the link identifier information includes at least one of the following: one or more link identifiers or a link identifier bitmap.

In some embodiments of the fourth aspect, the address indication information is a second value, and the first address is the MAC address of the AP. In an implementation, the MAC address of the AP is the MAC address of the AP affiliated with the AP MLD. The processing unit is configured to apply the management frame to a link on which the affiliated AP operates.

In still another implementation, the MAC address of the AP is an MAC address of a single-link AP or an MAC address of an AP not affiliated with any AP MLD. The processing unit is configured to apply the management frame to a link on which the single-link AP or the AP not affiliated with any AP MLD operates. In some embodiments of the fourth aspect, the management frame further includes first message integrity check MIC. The processing unit is further configured to: construct additional authentication data AAD, where the AAD includes the receiver address, the transmitter address, and a second address; generate second MIC based on the AAD; and perform security verification on the management frame based on the first MIC and the second MIC.

In some embodiments of the fourth aspect, the second address is the same as the first address.

In some embodiments of the fourth aspect, the first address includes the address indication information, and the second address is obtained by masking the address indication information in the first address to 0.

In some embodiments of the fourth aspect, the management frame further includes a first address. All bits of the first address are 1s. The processing unit is further configured to: determine, by the second multi-link device, that the first address is a wildcard basic service set identifier BSSID.

In some embodiments of the fourth aspect, the receiver address is carried in an address 1 field of the management frame, and the transmitter address is carried in the address 2 field of the management frame.

According to a fifth aspect, a communication apparatus is provided. The communication apparatus includes a transceiver and a processor. When the processor executes a computer program, the apparatus is enabled to: generate a management frame, where the management frame includes a receiver address, a transmitter address, and link indication information, and the link indication information indicates that the management frame is applied to at least one link corresponding to the link indication information; and send, by the transceiver, the management frame on a link on which a station indicated by the receiver address or a station indicated by the transmitter address operates.

In some embodiments of the fifth aspect, the apparatus further includes a memory coupled to the processor. The memory stores the computer program executable by the processor.

In some embodiments of the fifth aspect, the link indication information includes a first address, and the first address includes address indication information. In an implementation, the address indication information indicates whether the first address is an MLD MAC address of an access point AP MLD or an MAC address of an AP. In another implementation, the address indication information indicates whether the management frame is an MLD-level management frame or a link-level management frame. In an implementation, the MAC address of the AP is an MAC address of an AP affiliated with the AP MLD. In another implementation, the MAC address of the AP is an MAC address of a single-link AP or an MAC address of an AP not affiliated with any AP MLD. In some embodiments of the fifth aspect, the address indication information is carried in an individual/group I/G bit of an MAC address in an address 3 field of the management frame.

In some embodiments of the fifth aspect, the link indication information includes address indication information and a first address, and the address indication information indicates whether the first address is an MLD MAC address of an AP MLD or an MAC address of an AP. In an implementation, the MAC address of the AP is an MAC address of an AP affiliated with the AP MLD. In another implementation, the MAC address of the AP is an MAC address of a single-link AP or an MAC address of an AP not affiliated with any AP MLD.

In another implementation of the fifth aspect, the first address of the management frame is always set to the MAC address of the AP. The MAC address of the AP is an MAC address of an AP affiliated with the AP MLD, or an MAC address of a single-link AP, or an MAC address of an AP not affiliated with any AP MLD. In this case, the address indication information does not need to indicate which address the first address is. Optionally, the address indication information may indicate whether the management frame is an MLD-level management frame or a link-level management frame. In other words, the address indication information may indicate whether the management frame includes the link indication information.

In some embodiments of the fifth aspect, the address indication information is carried in an I/G bit of an MAC address in an address 2 field of the management frame.

In some embodiments of the fifth aspect, the address indication information is a first value, and the first address is the MLD MAC address of the AP MLD.

In some embodiments of the fifth aspect, the link indication information further includes link identifier information, and the link identifier information indicates that the management frame is applied to one or more links.

In some embodiments of the fifth aspect, the link indication information further includes link identifier information, the link identifier information is carried in a first element of the management frame, and the link identifier information indicates that the first element is applied to one or more links.

In some embodiments of the fifth aspect, a second element of the management frame does not carry link identifier information, indicating that the second element is applied to all links that establish an association between the first multi-link device and the second multi-link device.

In some embodiments of the fifth aspect, the link identifier information includes at least one of the following: one or more link identifiers or a link identifier bitmap.

In some embodiments of the fifth aspect, the address indication information is a second value, the first address is the MAC address of the AP, and the management frame is applied to a link on which the AP operates. In an implementation, the MAC address of the AP is an MAC address of an AP affiliated with the AP MLD. In another implementation, the MAC address of the AP is an MAC address of a single-link AP or an MAC address of an AP not affiliated with any AP MLD.

In some embodiments of the fifth aspect, when the processor executes the computer program, the apparatus is enabled to: construct additional authentication data AAD, where the AAD includes the receiver address, the transmitter address, and a second address; generate message integrity check MIC based on the AAD; and generate the management frame based on the MIC.

In some embodiments of the fifth aspect, the second address is the same as the first address.

In some embodiments of the fifth aspect, the first address includes the address indication information, and the second address is obtained by masking the address indication information in the first address to 0.

In some embodiments of the fifth aspect, the receiver address is carried in an address 1 field of the management frame, and the transmitter address is carried in the address 2 field of the management frame.

According to a sixth aspect, a communication apparatus is provided. The communication apparatus includes a transceiver and a processor. When the processor executes a computer program, the apparatus is enabled to: receive, by the transceiver, a management frame from a first multi-link device on a link on which a station in the communication apparatus operates, where the management frame includes a receiver address, a transmitter address, and link indication information, the receiver address is an address of the station in the communication apparatus, and the link indication information indicates that the management frame is applied to at least one link corresponding to the link indication information; and apply the management frame to the at least one corresponding link based on the link indication information.

In some embodiments of the sixth aspect, the apparatus further includes a memory coupled to the processor. The memory stores the computer program executable by the processor.

In some embodiments of the sixth aspect, the link indication information includes a first address. The first address includes address indication information. The address indication information indicates whether the first address is an MLD MAC address of an access point AP MLD or an MAC address of an AP. In an implementation, the MAC address of the AP is an MAC address of an AP affiliated with the AP MLD. In another implementation, the MAC address of the AP is an MAC address of a single-link AP or an MAC address of an AP not affiliated with any AP MLD.

In some embodiments of the sixth aspect, the address indication information is carried in an individual/group I/G bit of an MAC address in an address 3 field of the management frame. When the processor executes the computer program, the apparatus is enabled to mask the I/G bit in the address 3 field of the management frame to 0, to obtain the first address in the address 3 field of the management frame.

In some embodiments of the sixth aspect, the link indication information includes address indication information and a first address. In an implementation, the address indication information indicates whether the first address is an MLD MAC address of an AP MLD or an MAC address of an AP. In another implementation, the address indication information indicates whether the management frame is an MLD-level management frame or a link-level management frame. In an implementation, the MAC address of the AP is an MAC address of an AP affiliated with the AP MLD. In another implementation, the MAC address of the AP is an MAC address of a single-link AP or an MAC address of an AP not affiliated with any AP MLD.

In some embodiments of the sixth aspect, the address indication information is carried in an I/G bit of an MAC address in an address 2 field of the management frame. When the processor executes the computer program, the apparatus is enabled to mask the I/G bit in the address 2 field of the management frame to 0, to obtain the transmitter address in the address 2 field of the management frame.

In some embodiments of the sixth aspect, the address indication information is a first value, and the first address is the MLD MAC address of the AP MLD.

In some embodiments of the sixth aspect, when the processor executes the computer program, the apparatus is enabled to: if the link indication information does not include link identifier information, apply the management frame to all links that establish an association between the first multi-link device and the communication apparatus; or if the link indication information includes link identifier information, apply the management frame to one or more links indicated by the link identifier information.

In some embodiments of the sixth aspect, when the processor executes the computer program, the apparatus is enabled to: if the link indication information further includes link identifier information, and the link identifier information is carried in a first element of the management frame, apply the first element to one or more links indicated by the link identifier information.

In some embodiments of the sixth aspect, when the processor executes the computer program, the apparatus is enabled to: if a second element of the management frame does not carry link identifier information, apply the second element to all links that establish an association between the first multi-link device and a second multi-link device.

In some embodiments of the sixth aspect, the link identifier information includes at least one of the following: one or more link identifiers or a link identifier bitmap.

In some embodiments of the sixth aspect, the address indication information is a second value, and the first address is the MAC address of the AP. When the processor executes the computer program, the apparatus is enabled to apply the management frame to a link on which the AP operates. In an implementation, the MAC address of the AP is an MAC address of an AP affiliated with the AP MLD. In another implementation, the MAC address of the AP is an MAC address of a single-link AP or an MAC address of an AP not affiliated with any AP MLD.

In some embodiments of the sixth aspect, the management frame further includes first message integrity check MIC. When the processor executes the computer program, the apparatus is enabled to: construct additional authentication data AAD, where the AAD includes the receiver address, the transmitter address, and a second address; generate second MIC based on the AAD; and perform security verification on the management frame based on the first MIC and the second MIC.

In some embodiments of the sixth aspect, the second address is the same as the first address.

In some embodiments of the sixth aspect, the first address includes the address indication information, and the second address is obtained by masking the address indication information in the first address to 0.

In some embodiments of the sixth aspect, the management frame further includes a first address. All bits of the first address are 1s. When the processor executes the computer program, the apparatus is enabled to: determine, by the second multi-link device, that the first address is a wildcard basic service set identifier BSSID.

In some embodiments of the sixth aspect, the receiver address is carried in an address 1 field of the management frame, and the transmitter address is carried in the address 2 field of the management frame.

According to a seventh aspect, a communication method is provided. The method includes: constructing AAD, where the AAD includes a receiver address, a transmitter address, and a second address, and the second address is an MLD MAC address of an AP MLD or an MAC address of an AP affiliated with the AP MLD; and generating MIC based on the ADD.

In some embodiments of the seventh aspect, the method further includes: performing security verification on the received management frame based on the generated MIC and MIC in the received management frame.

In some embodiments of the seventh aspect, the receiver address is carried in an address 1 field of the AAD, the transmitter address is carried in an address 2 field of the AAD, and the second address is carried in an address 3 field of the AAD.

In some embodiments of the seventh aspect, the second address is determined based on a first address that is to be carried in an address 3 field of the management frame.

In some embodiments of the seventh aspect, the second address is the same as the first address.

In some embodiments of the seventh aspect, the first address includes address indication information, and the second address is obtained by masking the address indication information in the first address to 0.

In some embodiments of the seventh aspect, the first address does not include address indication information, and the second address is obtained by setting an I/G bit in the first address to a value of the address indication information. In this way, the second address may include the address indication information, indicating whether the second address is the MLD MAC address of the AP MLD or the MAC address of the AP. In an implementation, the MAC address of the AP is an MAC address of an AP affiliated with the AP MLD. In another implementation, the MAC address of the AP is an MAC address of a single-link AP or an MAC address of an AP not affiliated with any AP MLD.

In some other embodiments of the seventh aspect, the first address of the management frame is always set to the MAC address of the AP, and the second address is always set to the MAC address of the AP. The MAC address of the AP is an MAC address of an AP affiliated with the AP MLD, or an MAC address of a single-link AP, or an MAC address of an AP not affiliated with any AP MLD.

In some embodiments of the seventh aspect, the first address includes address indication information, and the second address is obtained by masking the address indication information in the first address to 0. The AAD includes address indication information, and the address indication information is carried in an I/G bit in the address 2 field of the AAD. In this way, the transmitter address may include the address indication information, indicating whether the second address is the MLD MAC address of the AP MLD or the MAC address of the AP. In an implementation, the MAC address of the AP is an MAC address of an AP affiliated with the AP MLD. In another implementation, the MAC address of the AP is an MAC address of a single-link AP or an MAC address of an AP not affiliated with any AP MLD.

In some embodiments of the seventh aspect, the transmitter address is determined based on an address that is to be carried in the address 2 field of the management frame.

In some embodiments of the seventh aspect, the transmitter address is the same as the address in the address 2 field of the management frame.

In some embodiments of the seventh aspect, the address in the address 2 field of the management frame includes address indication information, and the transmitter address is obtained by masking the address indication information in the address in the address 2 field of the management frame to 0.

In some embodiments of the seventh aspect, the address in the address 2 field of the management frame does not include address indication information, and the transmitter address is obtained by setting the address indication information in the address in the address 2 field of the management frame to a value of the address indication information. In this way, the transmitter address may include the address indication information, indicating whether the second address is the MLD MAC address of the AP MLD or the MAC address of the AP. In an implementation, the MAC address of the AP is an MAC address of an AP affiliated with the AP MLD. In another implementation, the MAC address of the AP is an MAC address of a single-link AP or an MAC address of an AP not affiliated with any AP MLD.

In some embodiments of the seventh aspect, the address in the address 2 field of the management frame includes address indication information, and the transmitter address is obtained by masking the address indication information in the address in the address 2 field of the management frame to 0. In addition, the AAD includes address indication information, and the address indication information is carried in an I/G bit in the address 3 field of the AAD.

According to an eighth aspect, a communication apparatus is provided. The apparatus includes: a construction unit, configured to construct AAD, where the AAD includes a receiver address, a transmitter address, and a second address, and the second address is an MLD MAC address of an AP MLD or an MAC address of an AP; and a generation unit, configured to generate MIC based on the ADD.

In some embodiments of the eighth aspect, the apparatus further includes a verification unit, configured to perform security verification on the received management frame based on the generated MIC and MIC in the received management frame.

In some embodiments of the eighth aspect, the receiver address is carried in an address 1 field of the AAD, the transmitter address is carried in an address 2 field of the AAD, and the second address is carried in an address 3 field of the AAD.

In some embodiments of the eighth aspect, the second address is determined based on a first address that is to be carried in the address 3 field of the management frame.

In some embodiments of the eighth aspect, the second address is the same as the first address.

In some embodiments of the eighth aspect, the first address includes address indication information, and the second address is obtained by masking the address indication information in the first address to 0.

In some embodiments of the eighth aspect, the first address does not include address indication information, and the second address is obtained by setting an I/G bit in the first address to a value of the address indication information. In this way, the second address may include the address indication information, indicating whether the second address is the MLD MAC address of the AP MLD or the MAC address of the AP. In an implementation, the MAC address of the AP is an MAC address of an AP affiliated with the AP MLD. In another implementation, the MAC address of the AP is an MAC address of a single-link AP or an MAC address of an AP not affiliated with any AP MLD.

In some other embodiments of the eighth aspect, the first address of the management frame is always set to the MAC address of the AP, and the second address is always set to the MAC address of the AP. The MAC address of the AP is an MAC address of an AP affiliated with the AP MLD, or an MAC address of a single-link AP, or an MAC address of an AP not affiliated with any AP MLD.

In some embodiments of the eighth aspect, the first address includes address indication information, and the second address is obtained by masking the address indication information in the first address to 0. The AAD includes address indication information, and the address indication information is carried in an I/G bit in the address 2 field of the AAD. In this way, the transmitter address may include the address indication information, indicating whether the second address is the MLD MAC address of the AP MLD or the MAC address of the AP. In an implementation, the MAC address of the AP is an MAC address of an AP affiliated with the AP MLD. In another implementation, the MAC address of the AP is an MAC address of a single-link AP or an MAC address of an AP not affiliated with any AP MLD.

In some embodiments of the eighth aspect, the transmitter address is determined based on an address that is to be carried in the address 2 field of the management frame.

In some embodiments of the eighth aspect, the transmitter address is the same as the address in the address 2 field of the management frame.

In some embodiments of the eighth aspect, the address in the address 2 field of the management frame includes address indication information, and the transmitter address is obtained by masking the address indication information in the address in the address 2 field of the management frame to 0.

In some embodiments of the eighth aspect, the address in the address 2 field of the management frame does not include address indication information, and the transmitter address is obtained by setting the address indication information in the address in the address 2 field of the management frame to a value of the address indication information. In this way, the transmitter address may include the address indication information, indicating whether the second address is the MLD MAC address of the AP MLD or the MAC address of the AP. In an implementation, the MAC address of the AP is an MAC address of an AP affiliated with the AP MLD. In another implementation, the MAC address of the AP is an MAC address of a single-link AP or an MAC address of an AP not affiliated with any AP MLD.

In some embodiments of the eighth aspect, the address in the address 2 field of the management frame includes address indication information, and the transmitter address is obtained by masking the address indication information in the address in the address 2 field of the management frame to 0. In addition, the AAD includes address indication information, and the address indication information is carried in an I/G bit in the address 3 field of the AAD.

According to a ninth aspect, a communication apparatus is provided. The communication apparatus includes a transceiver and a processor. When the processor executes a computer program, the apparatus is enabled to: construct AAD, where the AAD includes a receiver address, a transmitter address, and a second address, and the second address is an MLD MAC address of an AP MLD or an MAC address of an AP; and generate MIC based on the ADD. In an implementation, the MAC address of the AP is an MAC address of an AP affiliated with the AP MLD. In another implementation, the MAC address of the AP is an MAC address of a single-link AP or an MAC address of an AP not affiliated with any AP MLD.

In some embodiments of the ninth aspect, the communication apparatus further includes a memory coupled to the processor. The memory stores the computer program executable by the processor.

In some embodiments of the ninth aspect, when the processor executes the computer program, the apparatus is enabled to perform security verification on the received management frame based on the generated MIC and MIC in the received management frame.

In some embodiments of the ninth aspect, the receiver address is carried in an address 1 field of the AAD, the transmitter address is carried in an address 2 field of the AAD, and the second address is carried in an address 3 field of the AAD.

In some embodiments of the ninth aspect, the second address is determined based on a first address that is to be carried in the address 3 field of the management frame.

In some embodiments of the ninth aspect, the second address is the same as the first address.

In some embodiments of the ninth aspect, the first address includes address indication information, and the second address is obtained by masking the address indication information in the first address to 0.

In some embodiments of the ninth aspect, the first address does not include address indication information, and the second address is obtained by setting an I/G bit in the first address to a value of the address indication information. In this way, the second address may include the address indication information, indicating whether the second address is the MLD MAC address of the AP MLD or the MAC address of the AP. In an implementation, the MAC address of the AP is an MAC address of an AP affiliated with the AP MLD. In another implementation, the MAC address of the AP is an MAC address of a single-link AP or an MAC address of an AP not affiliated with any AP MLD.

In some embodiments of the ninth aspect, the first address includes address indication information, and the second address is obtained by masking the address indication information in the first address to 0. The AAD includes address indication information, and the address indication information is carried in an I/G bit in the address 2 field of the AAD. In this way, the transmitter address may include the address indication information, indicating whether the second address is the MLD MAC address of the AP MLD or the MAC address of the AP. In an implementation, the MAC address of the AP is an MAC address of an AP affiliated with the AP MLD. In another implementation, the MAC address of the AP is an MAC address of a single-link AP or an MAC address of an AP not affiliated with any AP MLD.

In some other embodiments of the ninth aspect, the first address of the management frame is always set to the MAC address of the AP, and the second address is always set to the MAC address of the AP. The MAC address of the AP is an MAC address of an AP affiliated with the AP MLD, or an MAC address of a single-link AP, or an MAC address of an AP not affiliated with any AP MLD.

In some embodiments of the ninth aspect, the transmitter address is determined based on an address that is to be carried in the address 2 field of the management frame.

In some embodiments of the ninth aspect, the transmitter address is the same as the address in the address 2 field of the management frame.

In some embodiments of the ninth aspect, the address in the address 2 field of the management frame includes address indication information, and the transmitter address is obtained by masking the address indication information in the address in the address 2 field of the management frame to 0.

In some embodiments of the ninth aspect, the address in the address 2 field of the management frame does not include address indication information, and the transmitter address is obtained by setting the address indication information in the address in the address 2 field of the management frame to a value of the address indication information. In this way, the transmitter address may include the address indication information, indicating whether the second address is the MLD MAC address of the AP MLD or the MAC address of the AP. In an implementation, the MAC address of the AP is an MAC address of an AP affiliated with the AP MLD. In another implementation, the MAC address of the AP is an MAC address of a single-link AP or an MAC address of an AP not affiliated with any AP MLD.

In some embodiments of the ninth aspect, the address in the address 2 field of the management frame includes address indication information, and the transmitter address is obtained by masking the address indication information in the address in the address 2 field of the management frame to 0. In addition, the AAD includes address indication information, and the address indication information is carried in an I/G bit in the address 3 field of the AAD.

According to a tenth aspect, a multi-link device is provided. The multi-link device includes the apparatus according to any one of the third aspect to the sixth aspect, the seventh aspect to the eighth aspect, or the implementations of the third aspect to the sixth aspect and the seventh aspect to the eighth aspect.

According to an eleventh aspect, a computer-readable storage medium is provided. The computer-readable storage medium stores a computer program. When the computer program is executed by a processor, operations of the method in any one of the first aspect, the second aspect, the seventh aspect, or embodiments of the first aspect, the second aspect, or the seventh aspect are implemented.

According to a twelfth aspect, a chip or a chip system is provided. The chip or the chip system includes a processing circuit and a communication interface. The processing circuit is configured to perform operations of the method according to any one of the first aspect, the second aspect, the seventh aspect, or embodiments of the first aspect, the second aspect, or the seventh aspect.

According to a thirteenth aspect, a computer program or a computer program product is provided. The computer program or the computer program product is tangibly stored on a computer-readable medium and includes computer-executable instructions. When the computer-executable instructions are executed, a device is enabled to implement operations of the method in any one of the first aspect, the second aspect, the seventh aspect, or embodiments of the first aspect, the second aspect, or the seventh aspect.

According to a fourteenth aspect, a wireless communication system is provided. The system includes a first multi-link device and a second multi-link device. Alternatively, the system includes a first multi-link device and a single-link station; or the system includes a second multi-link device and a single-link station. The first multi-link device may be a transmit end, and the single-link station is a receive end. Alternatively, the second multi-link device may be a receive end, and the single-link station is a transmit end. The first multi-link device may implement operations of the method according to any one of the first aspect, the seventh aspect, or embodiments of the first aspect or the seventh aspect. The second multi-link device may implement operations of the method according to any one of the second aspect, the seventh aspect, or embodiments of the second aspect or the seventh aspect. The first multi-link device may be an AP MLD or a non-AP MLD. The second multi-link device may be an AP MLD or a non-AP MLD.

### BRIEF DESCRIPTION OF DRAWINGS

With reference to the accompanying drawings and the following detailed descriptions, features, advantages, and other aspects of the implementations of this disclosure become more apparent. Several implementations of this disclosure are shown herein by way of example but not limitation. In the accompanying drawings, details are as follows:
FIG. 1 is a schematic diagram of a wireless communication system 100;
FIG. 2 is a schematic diagram of a connection scenario 200 of a multi-link device;
FIG. 3 is a schematic diagram of a format 300 of a multi-link element;
FIG. 4 is a signaling interaction diagram of a data transmission process 400 according to an embodiment of this disclosure;
FIG. 5 is a schematic diagram of a format 500 of a management frame according to an embodiment of the disclosure;
FIG. 6 is a schematic diagram of a scenario 600 of a multi-link device according to an embodiment of the disclosure;
FIG. 7 is another signaling interaction diagram of a data transmission process 700 according to an embodiment of this disclosure;
FIG. 8 is another schematic diagram of a format 800 of a management frame according to an embodiment of the disclosure;
FIG. 9 is a schematic diagram of a format 900 of AAD according to an embodiment of the disclosure;
FIG. 10 is a schematic flowchart of a data transmission method 1000 according to an embodiment of this disclosure;
FIG. 11 is another schematic flowchart of a data transmission process 1100 according to an embodiment of this disclosure;
FIG. 12 is a schematic block diagram of a communication apparatus 1200 according to an embodiment of this disclosure;
FIG. 13 is another schematic block diagram of a communication apparatus 1300 according to an embodiment of this disclosure;
FIG. 14 is still another schematic block diagram of a communication apparatus 1400 according to an embodiment of this disclosure; and
FIG. 15 is a simplified block diagram of an example apparatus 1500 according to an embodiment of this disclosure.

### DESCRIPTION OF EMBODIMENTS

The following describes embodiments of this disclosure in detail with reference to the accompanying drawings. Although some embodiments of this disclosure are shown in the accompanying drawings, it should be understood that this disclosure may be implemented in various forms, and should not be construed as being limited to the embodiments described herein. On the contrary, these embodiments are provided so that this disclosure will be thoroughly and completely understood. It should be understood that the accompanying drawings and embodiments of this disclosure are merely used as examples, but are not intended to limit the protection scope of this disclosure.

In the context of this disclosure, the term "wireless communication system" may be, for example, a wide area network system or a wireless local area network (Wireless Local Area Network, WLAN) system. The wireless communication system may support a plurality of WLAN communication protocols, for example, the 802.11ac/802.11ax/802.11be in the Institute of Electrical and Electronics Engineers (Institute of Electrical and Electronics Engineers, IEEE) 802.11 series protocols, or any protocol in future IEEE 802.11 series. For ease of description, embodiments of this application use the WLAN as an example for description. A WLAN may include a plurality of basic service sets (Basic Service Set, BSS). ABSS may have a basic service set identifier (BSS identifier, BSSID). A node of the BSS includes an access point station and a non-access point station (Non Access Point Station, Non-AP STA).

The term "multi-link device (Multi-Link Device, MLD)" may also be referred to as a multi-band device (multi-band device), and is a wireless communication device that can support parallel transmission of a plurality of links. Compared with a device that supports only single-link transmission, the multi-link device has higher transmission efficiency and a higher throughput. The multi-link device includes a plurality of affiliated (affiliated) stations. An affiliated station is a logical station operating on a link. The affiliated station may be an access point (Access Point, AP) or a non-access point station (non-Access Point Station, non-AP STA). The multi-link device may operate on the 1 GHz band, the 2.4 GHz band, the 5 GHz band, or the 6 GHz band, or may operate on another band. The multi-link device may implement wireless communication according to the 802.11 series protocols. For example, a station complying with an extremely high throughput (Extremely High Throughput, EHT) or a station complying with and based on the 802.11be or a station compatible with and supporting the 802.11be implements communication with another device. The another device may be a multi-link device, or may not be a multi-link device.

The term "AP MLD" means that a station affiliated with the AP MLD is an AP, and may also be referred to as a multi-link AP. The AP MLD may be an apparatus that is deployed in a wireless communication network to provide a wireless communication function for a non-AP associated with the AP MLD. The AP MLD is mainly deployed at home, inside a building, and in a campus, with a typical coverage radius of tens of meters to hundreds of meters. Certainly, the AP MLD may alternatively be deployed outdoors. The AP MLD is equivalent to a bridge that connects a wired network and a wireless network. A main function of the AP MLD is to connect various wireless network clients together and then connect the wireless network to the Ethernet. Specifically, the AP MLD may be a network device with a wireless fidelity (Wireless Fidelity, Wi-Fi) chip, for example, a communication device such as a base station, a router, a gateway, a repeater, a communication server, a switch, or a bridge. The base station may include a macro base station, a micro base station, a relay station, or the like in various forms. In addition, the AP MLD may support the 802.11be standard or a next-generation WLAN standard of the 802.11be standard. The AP MLD may also support WLAN standards such as 802.11ax, 802.11ac, 802.11n, 802.11g, 802.11b, and 802.11a.

The term "non-AP MLD" means that a station affiliated with the non-AP MLD is a non-AP STA, and may also be referred to as a multi-link non-AP STA. The non-AP MLD may be an apparatus having a wireless transceiving function, and may access a wireless local area network based on the AP MLD. The non-AP STA may be a wireless communication chip, a wireless sensor, or a wireless communication terminal, For example, the non-AP STA may be a user unit, an access terminal, a mobile station, a remote station, a subscriber station, a subscriber unit, a remote terminal, a mobile device, a user terminal, a terminal, a wireless communication device, a user agent, a user apparatus, or user equipment (user equipment, UE) that supports a Wi-Fi communication function. For example, the non-AP STA may include various handheld devices having a wireless communication function, a vehicle-mounted device, a wearable device, an Internet of Things (Internet of Things, IoT) device, a computing device, or another processing device connected to a wireless modem, and various forms of portable communication devices, handheld devices, portable computing devices, entertainment devices, game devices or systems, global positioning system devices, or any other proper devices configured to perform network communication by using a wireless medium. In addition, the non-AP MLD may support the 802.11be standard or a next-generation WLAN standard of the 802.11be standard. The non-AP MLD may also support WLAN standards such as 802.11ax, 802.11ac, 802.11n, 802.11g, 802.11b, and 802.11a.

When the AP MLD and the non-AP MLD perform data transmission, a link identifier (link ID) or a link identifier bitmap (link ID bitmap) may be used to identify a link or a station on a link. The link identifier may include at least one of the following: a media access control (Medium Access Control, MAC) address, an operation set, and a channel number, or optionally may further include a station identifier on the link, for example, an MAC address of the station or an association identifier (Associated Identifier, AID) of the station. The link may have a link address, for example, an affiliated station MAC address (affiliated STA MAC Address). The AP MLD may also have an AP MLD MAC address that is briefly referred to as an MLD address.

In the wireless communication system in this disclosure, both a transmit end and a receive end may be multi-link devices. This scenario is mainly used as an example in embodiments of this application. Alternatively, a transmit end may be a single-link station, and a receive end is a multi-link device. Alternatively, a transmit end may be a multi-link device, and a receive end is a single-link station.

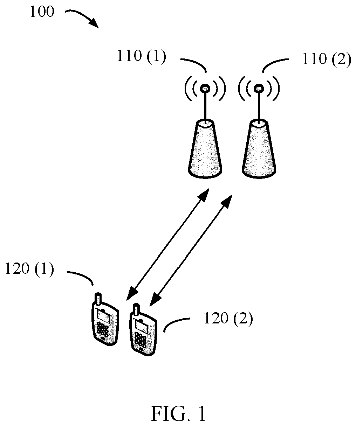

FIG. 1 is a schematic diagram of a wireless communication system 100. As shown in FIG. 1, the wireless communication system 100 includes an AP 110(1), an AP 110(2), a non-AP STA 120(1), and a non-AP STA 120(2). For ease of description, the AP 110(1) and the AP 110(2) are collectively referred to as an AP 110 below, and the non-AP STA 120(1) and the non-AP STA 120(2) are collectively referred to as a non-AP STA 120 below. It should be understood that the wireless communication system 100 in this disclosure may alternatively include an AP 110(1), an AP 110(2), and one or more single-link non-AP STAs (not shown in the figure). Alternatively, the wireless communication system 100 in this disclosure may include one or more single-link APs, a non-AP STA 120(1), and a non-AP STA 120(2).

For example, the AP 110(1) and the AP 110(2) may be APs affiliated with an AP MLD, and the non-AP STA 120(1) and the non-AP STA 120(2) may be non-AP STAs affiliated with a non-AP MLD. In the following descriptions, the affiliated AP and the affiliated non-AP are collectively referred to as affiliated stations (STA), and the AP and the non-AP STA are collectively referred to as STAs.

It should be understood that FIG. 1 is merely the schematic diagram of the wireless communication system, and may further include another network device or terminal device, for example, may further include a wireless relay device and a wireless backhaul device. In addition, the figure does not constitute a limitation on a quantity of AP MLDs or non-AP MLDs in the wireless communication system.

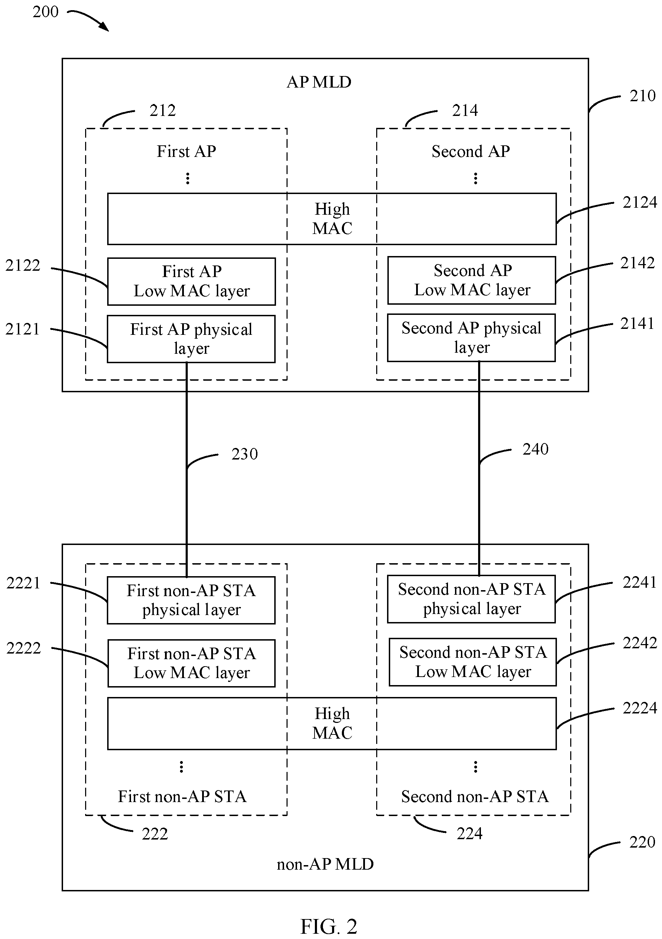

FIG. 2 is a schematic diagram of a connection scenario 200 of a multi-link device. FIG. 2 shows an AP MLD 210 and a non-AP MLD 220. There are at least two links between the AP MLD 210 and the non-AP MLD 220. FIG. 2 shows a first link 230 and a second link 240.

The AP MLD 210 has at least two logical APs. FIG. 2 shows a first AP 212 and a second AP 214. In addition, the first AP 212 has a first AP physical layer 2121 and a first AP low MAC layer 2122. The second AP 214 has a second AP physical layer 2141 and a second AP low MAC layer 2142. The first AP 212 and the second AP 214 have a shared high MAC layer 2124.

The non-AP MLD 220 has at least two logical non-AP STAs. FIG. 2 shows a first non-AP STA 222 and a second non-AP STA 224. In addition, the first non-AP STA 222 has a first non-AP STA physical layer 2221 and a first non-AP STA low MAC layer 2222. The second non-AP STA 224 has a second non-AP STA physical layer 2241 and a second non-AP STA low MAC layer 2242. The first non-AP STA 222 and the second non-AP STA have a shared high MAC layer 2224.

It should be understood that FIG. 2 is merely an example. For example, there may be more links between the AP MLD 210 and the non-AP MLD 220.

The non-AP MLD (for example, the non-AP MLD 220 in FIG. 2) may establish an association with a plurality of links of the AP MLD (for example, the AP MLD 210 in FIG. 2) at the same time by performing a multi-link establishment operation on one link. Specifically, the multi-link establishment operation may be performed by using a multi-link association request (Multi-link Association Request) frame and a multi-link association response (Multi-link Association Response) frame. The multi-link association request frame and the multi-link association response frame may carry information of the plurality of links, to implement simultaneous association with the plurality of links.

With reference to FIG. 2, for example, a multi-link establishment process may be: The non-AP MLD 220 sends a multi-link association request frame to the AP MLD 210 on the first link 230, where the multi-link association request frame carries non-AP STA side information (namely, information of the first non-AP STA 222) of the first link 230, and further carries non-AP STA side information (namely, information of the second non-AP STA 224) of the second link 240. After receiving the multi-link association request frame on the first link 230, the AP MLD 210 sends a multi-link association response frame to the non-AP MLD 220 on the first link 230, where the multi-link association response frame carries AP side information (namely, information of the first AP 212) of the first link 230, and further carries AP side information (namely, information of the second AP 214) of the second link 240. In this way, the first non-AP STA 222 and the second non-AP STA 224 of the non-AP MLD 220 establish an association with the first AP 212 and the second AP 214 of the AP MLD 210 respectively.

A multi-link element (Multi-link element) may be defined, to include related information of the non-AP MLD (for example, the first non-AP STA 222 and the second non-AP STA 224) in the multi-link association request frame.

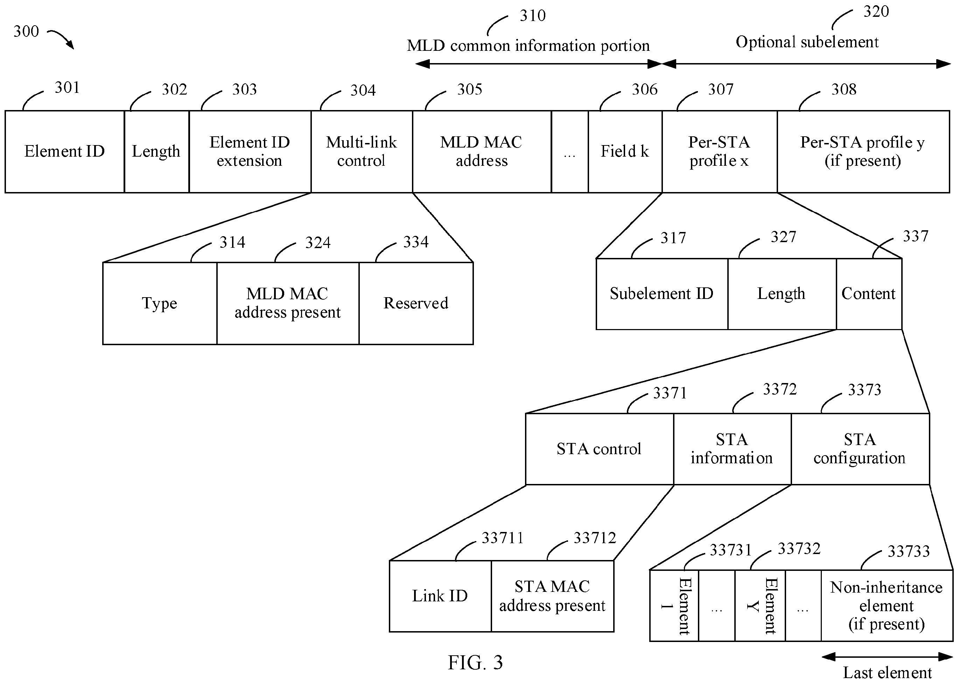

FIG. 3 is a schematic diagram of a format 300 of a multi-link element. As shown in FIG. 3, the multi-link element includes an element ID (Element Identifier) field 301, a length (Length) field 302, an element ID extension (Element ID Extension) field 303, a multi-link control (Multi-Link Control) field 304, and a common information field. The common information field includes an MLD MAC address (MLD MAC address) field 305, ..., a field k (Field k) such as a capability field 306, a per-STA profile x (Per-STA Profile x) field 307, and a per-STA profile y (Per-STA Profile y) field 308 (if present).

An MLD common information portion 310 is configured to carry related information of an MLD. The per-STA profile x field 307 and the per-STA profile y field 308 (if present) that follow are optional subelements 320, representing configuration information (per-STA profile) of each station.

Further, the multi-link control field 304 includes type (Type) 314, MLD MAC address present (MLD MAC Address present) 324, and reserved (Reserved) 334. For example, the type 314 may be tunneled direct link setup (Tunneled Direct Link Setup, TDLS).

Optionally, the per-STA profile x field 307 includes subelement ID (Subelement ID) 317, length (Length) 327, and content 337, where the content 337 includes a per-STA control field (Per-STA control field) 3371, a STA information (STA information) field 3372, and a STA configuration field 3373. The per-STA control field 3371 includes link ID (Link ID) 33711 and STA MAC address present (STA MAC Address present) 33712. The STA configuration field 3373 includes element 1 (Element 2) 33731, ..., element Y (Element Y) 33732, ..., and non-inheritance element (Non-Inheritance element) 33733 (if present).

It may be understood that another field may be further included between the MLD MAC address field 305 and the field k 306 in FIG. 3, and is not shown herein. Another element is included between the element 1 33731 and the element Y 33732, for example, an element 2, an element 3, ..., and an element Y-1. Other elements may be included between the element Y 33732 and the non-inheritance element 337322, where the non-inheritance element 33733 is the last element.

For communication between a multi-link device and another multi-link device, for example, communication between the AP MLD 210 and the non-AP MLD 220 shown in FIG. 2, a management frame sent by the first AP 212 is usually sent to the first non-AP STA 222 on the first link 230. However, a multi-link feature cannot be fully used in a current solution, resulting in low transmission efficiency.

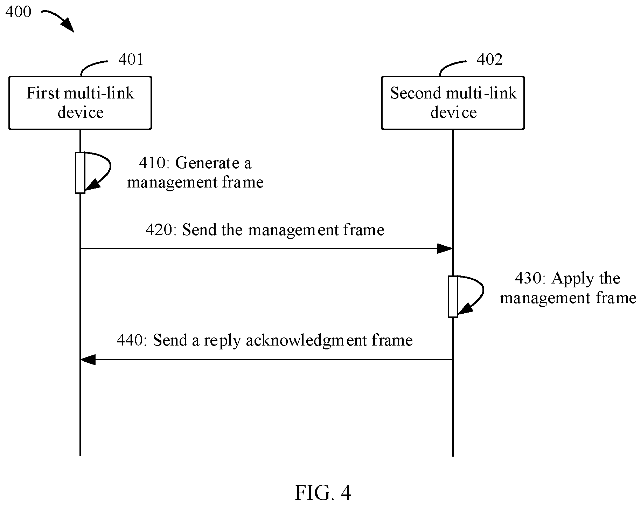

An embodiment of this disclosure provides a data transmission solution. In this solution, the management frame can be transmitted across links, and a multi-link feature is fully utilized. This ensures communication efficiency. The following describes embodiments of this disclosure in more detail with reference to FIG. 4 to FIG. 9.

FIG. 4 is a signaling interaction diagram of a data transmission process 400 according to an embodiment of this disclosure. The process 400 includes a first multi-link device 401 and a second multi-link device 402. The first multi-link device 401 may be an AP MLD or a non-AP MLD. Correspondingly, the second multi-link device 402 may be a non-AP MLD or an AP MLD.

For ease of description, in the following examples, it may be assumed that the first multi-link device 401 is the AP MLD, for example, the AP MLD 210 shown in FIG. 2, and it is assumed that the second multi-link device 402 is the non-AP MLD, for example, the non-AP MLD 220 shown in FIG. 2. It may be understood that the communication process shown in FIG. 4 is only an example rather than a limitation. In this embodiment of this disclosure, interaction signaling that is not shown in FIG. 4 may be included, or some signaling shown in FIG. 4 is omitted.

In step 410 of the process 400, the first multi-link device 401 may first generate a management frame.

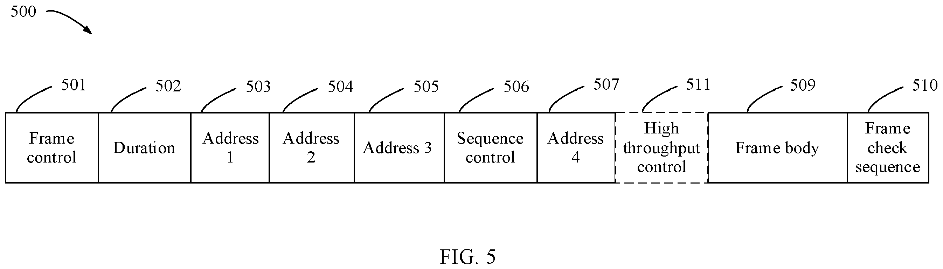

Specifically, the generated management frame may have a format shown in FIG. 5.

FIG. 5 is a schematic diagram of a format 500 of a management frame according to an embodiment of the disclosure. The format 500 includes frame control (Frame Control) 501, duration (Duration) 502, address 1 (Address 1) 503, address 2 (Address 2) 504, address 3 (Address 3) 505, sequence control (Sequence Control) 506, address 4 (Address 4) 507, frame body (Frame Body) 509, and frame check sequence (Frame Check Sequence, FCS) 510. The frame body 509 may include a medium access control management protocol data unit (MAC Management Protocol Data Unit, MMPDU). Additionally or optionally, the format 500 may further include high throughput control (High Throughput Control, HT Control) 511.

For example, the frame control 501 may include a plurality of subfields, for example, protocol version (Protocol Version), frame type (Type), subtype (Subtype), from distributed system (From Distributed System, From DS), to distributed system (To DS), retry (Retry), power management (Power Management), and more data (More Data). For example, the frame type "00" indicates the management frame.

For example, the duration 502 may indicate the transmission opportunity duration. The address 1 503, the address 2 504, the address 3 505, and the address 4 507 may be collectively referred to as an address field, and indicate a receiver address, a transmitter address, a source address, a destination address, a BSSID, or the like of the management frame. The frame body 509 may carry specific information. The FCS 510 may be used for error detection. For example, the FCS 510 may include 32-bit cyclic redundancy check (Cyclic Redundancy Check, CRC). The HT control 511 may include aggregated control (Aggregated Control, A-Control), and further include a control list and padding.

It may be understood that, in communication between multi-link devices, there are two different types of management frames: an MLD-level (MLD level) management frame and a link-level (link level) management frame. The MLD-level management frame is specific to an MLD, and may be applied to more than one link. It may be understood that if the management frame indicates only one link, the MLD-level management frame may also be applied to the link. The link-level management frame is specific to a specific link, and may be applied to the specific link, or the link-level management frame is specific to a link, and may be applied to the link. In addition, different MAC addresses can be used to distinguish frame types. For example, an MAC address of an MLD corresponds to an MLD-level management frame. An MAC address of an affiliated station corresponds to a link-level management frame, or an MAC address of a station not affiliated with any MLD corresponds to a link-level management frame. It should be understood that the station not affiliated with any MLD is a single-link station. In this embodiment, the station affiliated with the MLD is mainly used as an example for description. An implementation of a single-link station is similar to that of the MLD. For brevity, details are not described again. It should be further understood that, when at least one of the transmit end and the receive end is a single-link station, there is only one link between the transmit end and the receive end. Therefore, when sending the management frame, the transmit end may set content of the management frame according to the existing protocol 802.11-2020 version. After receiving the management frame, the receive end may interpret and execute the content of the management frame according to the existing protocol 802.11-2020 version. This is because when at least one of the transmit end and the receive end is a single-link station, there is only one associated link between the transmit end and the receive end, and there is no possibility of cross-link transmission. Therefore, A1 and A2 in the management frame may be set to station addresses, and A3 may be set to an MAC address, namely, a BSSID, of an AP. Specific implementation is as follows:

First, when the transmit end is a single-link station, for example, a single-link AP, and the receive end is a non-AP STA MLD, A3 is set to an MAC address of the single-link AP of the transmit end.

For another example, when the transmit end is a single-link station, for example, a single-link non-AP STA, and the receive end is an AP MLD, A3 is set to an MAC address of an AP associated with the single-link non-AP STA. The AP associated with the single-link non-AP STA is an AP affiliated with an AP MLD of the transmit end.

For another example, when the transmit end is an AP MLD, and the receive end is a single-link station, for example, a single-link non-AP STA, A3 is set to an MAC address of an AP associated with the receive end, namely, the non-AP STA. The associated AP is an AP affiliated with the AP MLD.

For another example, when the transmit end is a non-AP STA MLD, and the receive end is a single-link station, for example, a single-link AP, A3 is set to an MAC address of the receive end, namely, the single-link AP.

For still another example, when both the transmit end and the receive end are single-link stations, for example, when the transmit end is a single-link AP and the receive end is a single-link non-AP STA, A3 is set to an MAC address of the AP of the transmit end. For example, when the receive end is a single-link AP and the transmit end is a single-link non-AP STA, A3 is set to an MAC address of the AP of the receive end.

In the foregoing example, the management frame or the element in the management frame is applied to an associated link between the transmit end and the receive end. In a subsequent embodiment, for example, both the transmit end and the receive end are multi-link devices. When it is mentioned that either the transmit end or the receive end is a single-link station, this implementation is applicable.

Optionally, the multi-link device may distinguish between types of the management frame by using different MAC addresses (for example, carried in the address 3). For example, an MLD MAC address of an MLD corresponds to an MLD-level management frame. For example, an MAC address of a station affiliated with the MLD corresponds to a link-level management frame, or an MAC address of a single-link station or a station not affiliated with the MLD corresponds to a link-level management frame.

The management frame may include a receiver address, a transmitter address, and link indication information. The link indication information may indicate at least one link to which the management frame is applied. The link indication information includes a first address.

Specifically, for an MLD-level management frame, the first address is the MLD MAC address of the AP MLD. For a link-level management frame, when both the transmit end and the receive end are multi-link devices, the management frame is applied to one link or a specific link between the transmit end and the receive end; or when at least one of the transmit end and the receive end is a single-link station, only one link exists between the transmit end and the receive end. In these two cases, the first address may be set to an MAC address of an AP, specifically, a BSSID of the AP, for example, a BSSID of an AP affiliated with the AP MLD, or an AP not affiliated with any AP MLD, namely, a single-link AP. In this embodiment, the AP affiliated with the AP MLD is mainly used as an example for description. In this way, a design of the first address can help implement cross-link transmission of the management frame between the multi-link devices. The first address is the BSSID of the AP not affiliated with any AP MLD or the BSSID of the single-link AP. There is a similar implementation. For brevity, according to various scenarios described above, in several cases in which the address of A3 is the MAC address of the AP and is specifically the MAC address of the single-link AP, the "affiliated AP" in the following embodiments is replaced with the "AP not affiliated with any AP MLD" or the "single-link AP". Details are not described again.

For ease of description, in the following descriptions, the MLD MAC address of the AP MLD is briefly described as the MAC address of the AP MLD, and the MAC address of the AP affiliated with the AP MLD is briefly described as the MAC address of the affiliated AP. The MAC address of the affiliated AP may be the BSSID of the affiliated AP.

In some examples, the address 1 503 may carry the receiver address of the management frame, the address 2 504 may carry the transmitter address of the management frame, and the address 3 505 may carry the first address.

For example, the receiver address may be the MAC address of the station of the receive end, and the transmitter address may be the MAC address of the station of the transmit end. The management frame is transmitted on a link on which the station of the receive end or the station of the transmit end operates.

For example, as shown in the following Table 1, if the management frame is sent from the AP MLD to the non-AP MLD, namely, if the transmission direction is downlink, the address 1503 may carry the MAC address of the non-AP STA, and the address 2 504 may carry the MAC address of the AP. If the management frame is sent from the non-AP MLD to the AP MLD, namely, if the transmission direction is uplink, the address 1 503 may carry the MAC address of the AP, and the address 2 504 may carry the MAC address of the non-AP STA. If the management frame is sent from the non-AP MLD to the non-AP MLD, namely, in a case of peer-to-peer (Peer to peer) communication, the address 1 503 and the address 2 504 carry the MAC address of the STA. In addition, regardless of uplink or downlink, the address 3 505 carries the first address.

**Table 1**

| | Transmission direction | Address 1 | Address 2 | Address 3 |
|---|---|---|---|---|
| Management frame | Downlink | MAC address of a NON-AP STA | MAC address of an AP | First address |
| | Uplink | MAC address of an AP | MAC address of a NON-AP STA | First address |
| | Peer-to-peer (Peer to peer) communication | MAC address of a STA | MAC address of a STA | First address |

In some other examples, for example, during air interface transmission, the address 1 503 may carry an address of a corresponding link of the management frame. Similarly, the address 2 504 may carry an address of a corresponding link of the management frame, and the address 3 505 may carry the first address.

For example, if the management frame is applied to at least two links, the first multi-link device 401 may generate an MLD-level management frame. If the management frame is applied to one link, the first multi-link device 401 may generate a link-level management frame. Optionally, in a specific example, if the management frame is applied to a link, an MLD-level management frame may also be generated.

In this embodiment of this disclosure, to implement cross-link transmission, the address 1 503 may carry the receiver address, the address 2 504 may carry the transmitter address, and the address 3 505 may carry the first address. For example, it is assumed that the first multi-link device 401 is the AP MLD 210 in FIG. 2, and the second multi-link device is the non-AP MLD 220 in FIG. 2. In this case, the address 1 503 carries an MAC address (for example, the MAC address of the first non-AP STA 222 in FIG. 2) of a non-AP STA affiliated with the non-AP MLD 220, and the address 2 504 carries an MAC address (for example, a BSSID of the first AP 212 in FIG. 2) of an AP affiliated with the AP MLD 210.

For example, in the existing protocol 802.11-2020, the MAC address of the AP is the same as the BSSID of the AP. Therefore, in some embodiments, the MAC address of the affiliated AP may be a BSSID of the affiliated AP.

In this embodiment of this disclosure, the link indication information may include address indication information. The address indication information may indicate an attribute of the first address or a meaning of the first address; or the address indication information may indicate a type of the management frame.

Specifically, the address indication information indicates whether the first address is the MAC address of the AP MLD or the MAC address of the AP. The address indication information is a first value (for example, 1) to indicate that the first address is the MAC address of the AP MLD, and the address indication information is a second value (for example, 0) to indicate that the first address is the MAC address of the affiliated AP. The MAC address of the affiliated AP may be the BSSID of the affiliated AP, or the BSSID of the AP not affiliated with any AP MLD. In this embodiment, the AP affiliated with the MLD is mainly used as an example for description. An implementation of the AP not affiliated with any AP MLD or the single-link AP is similar to that of the AP affiliated with the MLD. For brevity, the "affiliated AP" in this embodiment may be replaced with the "AP not affiliated with any AP MLD" or replaced with the "single-link AP". Details are not described again.

Because the first address is carried in the address 3 field of the management frame, it may be considered that the address indication information indicates whether the address 3 field carries the MAC address of the AP MLD or the MAC address of the affiliated AP.

In another understanding, the address indication information may indicate the type of the management frame. Specifically, the address indication information is the first value indicating that the management frame is the MLD-level management frame, and the address indication information is the second value indicating that the management frame is the link-level management frame. The first value is different from the second value. For example, the first value is 1, and the second value is 0. For another example, the first value is 0, and the second value is 1.

In an implementation of this disclosure, the first address may include address indication information. In other words, the address indication information is located in the first address, or the address indication information is some bits of the first address. Specifically, the address indication information may be carried in the address 3 field of the management frame. For example, the address indication information may be carried in an individual/group (Individual/Group, I/G) bit in the MAC address of the address 3 field. In other words, in this embodiment of this disclosure, the I/G bit of the first address carried in the address 3 field may be set to a value of the address indication information. A default value of the I/G bit of the first address may be 0. If the address indication information is the first value (1), the I/G bit of the first address may be reset to 1. If the address indication information is the second value (0), the I/G bit of the first address is kept at 0.

It may be understood that, a specific location of the I/G bit is not limited in this embodiment of this disclosure. For example, the I/G bit may be a least significant bit or a bit B0 of a first byte of the address 3 field, or may be located at another location. In other words, in this implementation, the address 3 field is used to carry the first address, and the first address includes the address indication information. For example, a bit B0 in the first address is used as the address indication information.

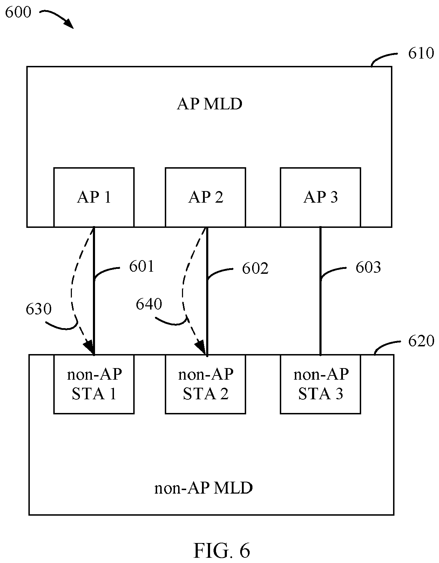

FIG. 6 is a schematic diagram of a scenario 600 of a multi-link device according to an embodiment of the disclosure. FIG. 6 shows an AP MLD 610 and a non-AP MLD 620. The AP MLD 610 includes an AP 1, an AP 2, and an AP 3. The non-AP MLD 620 includes a non-AP STA 1, a non-AP STA 2, and a non-AP STA 3. It is assumed that three associated links have been established between the AP MLD 610 and the non-AP MLD 620 by using a multi-link establishment process, including a first link 601, a second link 602, and a third link 603.

In some embodiments, if a management frame to be generated by the first multi-link device 401 is an MLD-level management frame, when generating the management frame, the first multi-link device 401 may set an I/G bit (namely, address indication information) of an MAC address in the address 3 505 to a first value (for example, 1), and the first address in the address 3 505 is the MAC address of the AP MLD. In this case, the first address of the management frame carries address indication information. For example, the first value is "1", the first address is the MAC address of the AP MLD, but the I/G bit of the MAC address is set to "1" instead of "0".

For example, it is assumed that the address 3 field includes 48 bits, and the I/G bit is located in a bit B0 of a first byte. In this case, the MAC address of the AP MLD may be first represented as a 48-bit character string, then the bit B0 of the character string is set to 1, and then the character string whose bit B0 is 1 is carried in the address 3 field.

It should be noted that, in the existing protocol 802.11-2020, the address in the address 2 (A2) of the management frame is a transmitter address and can only be a unicast address; and the address 3 (A3) is a BSSID of an AP and is generally also a unicast address. However, in the foregoing embodiment in which the first address includes the address indication information in this disclosure, the first address needs to be not all "1"s. For some management frames such as a probe request frame, if the A3 address of the management frame is set to all "1"s, for example, is a wildcard (wildcard) BSSID, 48 bits of the A3 address are all "1"s. In this case, the wildcard BSSID cannot carry the address indication information. In other words, the embodiment in which the first address includes the address indication information may be applied only when the address in the address 3 is not all 1s.

In another implementation of this disclosure, the address indication information may be located outside the first address. In this implementation, link indication information includes the address indication information and the first address, and the address indication information indicates whether the first address is an MAC address of an AP MLD or an MAC address of an affiliated AP. In other words, in the foregoing example, it is assumed that the address indication information is carried in the I/G bit of the address 3. However, this is not limited in this embodiment of this disclosure.

In an example, the address indication information may be carried in the I/G bit of the address 3 of the management frame. Specifically, if the address indication information is the first value (for example, 1), it indicates that the first address in the address 3 is the MAC address of the AP MLD. If the address indication information is the second value (for example, 0), it indicates that the first address in the address 3 is the MAC address of the affiliated AP. In other words, in this embodiment of this disclosure, an I/G bit of the address carried in the address 2 field may be set to a value of the address indication information. A default value of the I/G bit of the address in the address 2 field may be 0. If the address indication information is the first value (1), the I/G bit of the address in the address 2 field is reset to 1. If the address indication information is the second value (0), the I/G bit of the address in the address 2 field is kept at 0.

For example, the address indication information is the first value (for example, 1). When generating the management frame, the first multi-link device 401 may include the MAC address of the AP MLD to the address 3 field. For the address 2 field, a character string represented by the transmitter address (for example, an MAC address of the AP 1 in FIG. 6) may be first determined, then an I/G bit of the character string is set to 1, and then the character string whose I/G bit is 1 is carried in the address 2 field.

In another example, the address indication information may be carried in From DS and To DS of frame control of the management frame. Specifically, if the address indication information is the first value (for example, the first value may be From DS = 1 and To DS = 0), it indicates that the first address in the address 3 is the MAC address of the AP MLD. If the address indication information is the second value (for example, the second value may be From DS = 1 and To DS = 1), it indicates that the first address in the address 3 is the MAC address of the affiliated AP.

It should be noted that the address indication information may alternatively be carried in another field or bit. Details are not described again in this disclosure.

In some embodiments of this disclosure, the address indication information is the first value (for example, 1), and the first address is the MAC address of the AP MLD. The link indication information may further include link identifier information, or does not include link identifier information.

As described above, the address indication information is the first value, and may further indicate that the management frame is the MLD-level management frame.

In an example, the management frame may not carry the link identifier information, to indicate that the management frame is applied to all links that establish an association, and specifically all links that establish an association between the first multi-link device 401 and the second multi-link device 402. With reference to FIG. 6, if the management frame is applied to all links, namely, the first link 601, the second link 602, and the third link 603, the management frame may not carry the link identifier information. This can reduce signaling overheads.

Further, the foregoing description "the management frame is applied to all links that establish an association" is applicable to a case in which an address 1 field (a receiver address) of the management frame is a unicast address. If the address 1 field (the receiver address) of the management frame is a groupcast address, "the management frame is applied to all links that establish an association" is replaced with "the management frame is applied to all links". For example, if the AP affiliated with the AP MLD sends a groupcast management frame, "the management frame is applied to all links that establish an association" is replaced with "the management frame is applied to all links of the AP MLD". For example, the management frame may include at least one element. For example, the frame body 509 of the management frame may include one or more elements. Optionally, the element in the frame body 509 may have the format 300 shown in FIG. 3. In an example, the element may carry link identifier information. For example, the link identifier information is carried in the link ID field 33711 shown in FIG. 3. However, it may be understood that the element in the frame body 509 may alternatively have a format different from that in FIG. 3. This is not limited in this disclosure.

If an element (for example, a second element) of the management frame is applied to all links that establish an association between the first multi-link device 401 and the second multi-link device 402, the second element may not carry any link identifier information. In other words, the second element does not carry any link identifier information, to indicate the second multi-link device to apply the second element to all the links. In another implementation, the second element does not carry any link identifier information, to indicate the second multi-link device to apply the second element to a link on which the element is transmitted. The link ID may alternatively occupy another quantity of bits, for example, 4 bits.

In another example, the management frame may carry link identifier information of a link to which the management frame is applied, to indicate that the management frame is applied to at least one link. In other words, in this embodiment, the link indication information further includes the link identifier information. For example, the link identifier information may be a link identifier (link ID) or a link identifier bitmap (link ID bitmap). With reference to FIG. 6, the management frame is applied to the first link 601 and the second link 602.

In an example, the link identifier information includes a link ID of the first link 601 and a link ID of the second link 602. For example, it is assumed that two bits are used to carry a link ID, the link ID of the first link 601 is "00", the link ID of the second link 602 is "01", and a link ID of the third link 603 is "10". In this case, the link identifier information may include "00" and "01", indicating that the management frame is applied to the first link 601 and the second link 602.

In another example, the link identifier information may include a link identifier bitmap. Bits corresponding to the first link 601 and the second link 602 in the link identifier bitmap are set to 1, and other bits are set to 0. In this embodiment, a quantity of bits included in the link identifier bitmap may be equal to (or greater than) a quantity of all links or is set to 8 or 16, and a sequence of the bits included in the link identifier bitmap may have a correspondence with all the links. For example, it is assumed that the bits included in the link identifier bitmap sequentially correspond to the first link 601, the second link 602, and the third link 603 from a high bit to a low bit. In this case, the link identifier information may include "110", indicating that the management frame is applied to the first link 601 and the second link 602. In this way, fewer bits can clearly indicate a link to which the management frame is applied.

For example, the management frame may include at least one element, and the link identifier information may be carried in an element (for example, the first element) of the management frame. In other words, the first element of the management frame carries the link identifier information, to indicate the second multi-link device to apply the first element to one or more links indicated by the link identifier information.

For example, the management frame may include at least one element, and the second element of the management frame is applied to all the links. In this case, the second element may carry the link identifier information, and the link identifier information indicates all the links. For example, bits corresponding to all associated links are set to a preset value or a first value based on the link identifier bitmap, to indicate that the second element is applied to all the corresponding links.

It may be understood that, in this embodiment, if the link identifier information carried in the first element indicates a link, the second multi-link device applies the first element to the link. If the link identifier information carried in the first element indicates a plurality of links (for example, two links or all the links), the second multi-link device applies the first element to the plurality of links.

The link identifier information includes at least one of the following: one or more link identifiers or a link identifier bitmap.

In some other embodiments of this disclosure, the address indication information is the second value (for example, 0), and the first address is the MAC address of the affiliated AP. Specifically, the first address may be a BSSID of the affiliated AP, and the management frame may be applied by the second multi-link device to a link on which the affiliated AP operates.

As described above, the address indication information is the second value, and may further indicate that the management frame is the link-level management frame. The link-level management frame is specific to a specific link, and may be applied to the specific link, or the link-level management frame is specific to a link, and may be applied to the link.

"The link-level management frame is specific to a specific link, and may be applied to the specific link":

In an example, the management frame may not carry the link identifier information, to indicate that the management frame is applied to a link on which the AP indicated by the first address operates.

In another example, the management frame may carry link identifier information of a link to which the management frame is applied, to indicate that the management frame is applied to at least one link. In other words, in this embodiment, the link indication information further includes the link identifier information. For example, the link identifier information may be a link identifier (link ID) or a link identifier bitmap (link ID bitmap). With reference to FIG. 6, the management frame is applied to the first link 601 and the second link 602.

In an example, the link identifier information includes a link ID of the first link 601 and a link ID of the second link 602. For example, it is assumed that two bits are used to carry a link ID, the link ID of the first link 601 is "00", the link ID of the second link 602 is "01", and a link ID of the third link 603 is "10". In this case, the link identifier information may include "00" and "01", indicating that the management frame is applied to the first link 601 and the second link 602. The link ID may alternatively occupy another quantity of bits, for example, 4 bits.

In another example, the link identifier information may include a link identifier bitmap. Bits corresponding to the first link 601 and the second link 602 in the link identifier bitmap are set to 1, and other bits are set to 0. In this embodiment, a quantity of bits included in the link identifier bitmap may be equal to (or greater than) a quantity of all links or is set to 8 or 16, and a sequence of the bits included in the link identifier bitmap may have a correspondence with all the links. For example, it is assumed that the bits included in the link identifier bitmap sequentially correspond to the first link 601, the second link 602, and the third link 603 from a high bit to a low bit. In this case, the link identifier information may include "110", indicating that the management frame is applied to the first link 601 and the second link 602. In this way, fewer bits can clearly indicate a link to which the management frame is applied.

Optionally, a link indicated by the link identifier information includes a link identifier corresponding to the AP for transmitting the management frame, or a bit corresponding to the link identifier bitmap is set to 1.

For example, the management frame may include at least one element, and the link identifier information may be carried in an element (for example, the first element) of the management frame. In other words, the first element of the management frame carries the link identifier information, to indicate the second multi-link device to apply the first element to one or more links indicated by the link identifier information.

For example, the management frame may include at least one element, and the second element of the management frame is applied to all the links. In this case, the second element may carry the link identifier information, and the link identifier information indicates all the links. For example, bits corresponding to all associated links are set to a preset value or a first value based on the link identifier bitmap, to indicate that the second element is applied to all the corresponding links.

It may be understood that, in this embodiment, if the link identifier information carried in the first element indicates a link, the second multi-link device applies the first element to the link. If the link identifier information carried in the first element indicates a plurality of links (for example, two links or all the links), the second multi-link device applies the first element to the plurality of links.

"The link-level management frame is specific to a link, and may be applied to the link". In this case, the management frame does not carry the link identifier information.

With reference to FIG. 6, if the management is the link-level management frame, and is applied to the second link 602, the first address is a BSSID of the affiliated AP (namely, the AP 2).

In an example, if downlink transmission is performed on the second link 602 and the management frame is applied to the second link 602, the address 1 carries an MAC address of the non-AP STA 2, the address 2 carries an MAC address of the AP 2, and the address 3 carries the BSSID of the AP 2. In another example, if downlink transmission is performed on the first link 601 and the management frame is applied to the second link 602, the address 1 carries an MAC address of the non-AP STA 1, the address 2 carries an MAC address of the AP 1, and the address 3 carries the BSSID of the AP 2. The management frame does not need to additionally carry link information. This can avoid repeated signaling indication, and reduce signaling overheads.

In step 420 of the process 400, the first multi-link device 401 sends the management frame to the second multi-link device 402.

The sending step may be performed in a unicast manner, or may be performed in a broadcast manner. This is not limited in this disclosure.

Specifically, the first multi-link device 401 may send the management frame to the second multi-link device 402 on a link between the address 1 and the address 2 of the management frame.

In some examples, as shown in FIG. 6, the address 1 of the management frame carries the MAC address of the non-AP STA 1, and the address 2 of the management frame carries the MAC address of the AP 1. In this case, the AP MLD 610 may send the management frame to the non-AP STA 1 in the non-AP MLD 620 by using the AP 1 on the first link 601, as shown by a dashed line 630 in FIG. 6.

In some other examples, as shown in FIG. 6, the address 1 of the management frame carries the MAC address of the non-AP STA 2, and the address 2 of the management frame carries the MAC address of the AP 2. In this case, the AP MLD 610 may send the management frame to the non-AP STA 2 in the non-AP MLD 620 by using the AP 2 on the second link 602, as shown by a dashed line 640 in FIG. 6.

In step 430 of the process 400, the second multi-link device 402 applies the received management frame to the indicated one or more links.

As described above, the link indication information of the management frame includes the first address. The first address includes the address indication information. In other words, the address indication information is located in the first address. Alternatively, the link indication information of the management frame includes the first address and the address indication information.

In some embodiments, if the address indication information is the first value (for example, 1), the second multi-link device 402 may determine that the first address is the MAC address of the AP MLD. Optionally, it may be further determined that the management frame is the MLD-level management frame.

If the first address includes the address indication information, the second multi-link device 402 may obtain information carried in the address 3 field of the management frame, and reset the I/G bit to 0, to read the first address in the address 3, namely, the MAC address of the AP MLD. With reference to the scenario in FIG. 6, the first address may be an MAC address of the AP MLD 610.

Further, the second multi-link device 402 may determine whether the management frame carries the link indication information.

If the management frame does not carry the link identifier information, the second multi-link device 402 may apply the management frame to all the links (for example, the first link 601, the second link 602, and the third link 603) that establish an association between the first multi-link device 401 and the second multi-link device 402. In an example, the management frame may be an add block acknowledgment (ADD Block ACK, ADDBA) request frame or an add block acknowledgment response frame.

If the management frame carries the link identifier information, the second multi-link device 402 may apply the management frame to the one or more links indicated by the link identifier information. For example, with reference to FIG. 6, if the management frame includes the link identifier information of the first link 601 and the second link 602 (for example, the link identifier information may include the link ID of the first link 601 and the link ID of the second link 602 by using two link ID fields; or the link identifier information may be indicated by setting corresponding two bits in the link identifier bitmap to the first value), the management frame may be applied to the first link 601 and the second link 602. In an example, the management frame may be a target wake time (Target Wake Time, TWT) setup frame, where a TWT element in the TWT setup frame carries the link identifier information, and the link identifier information indicates one or more links to be applied.

For example, the management frame includes at least one element. If the first element carries the link identifier information, the second multi-link device 402 may apply the first element to the one or more links indicated by the link identifier information. If the second element does not carry the link identifier information, the second multi-link device 402 may apply the second element to all the links that establish an association between the first multi-link device 401 and the second multi-link device 402. Alternatively, in another implementation, if the second element does not carry the link identifier information, the second multi-link device 402 may apply the second element to only a link (namely, a link on which a station indicated by the receiver address or a station indicated by the transmitter address operates) on which the management frame is transmitted.

In some other embodiments, if the address indication information is the second value (for example, 0), the second multi-link device 402 may determine that the first address is the MAC address of the affiliated AP. Optionally, it may be further determined that the management frame is the link-level management frame. Further, the second multi-link device 402 may apply the management frame to a link on which the affiliated AP operates. In an example, the management frame may be a notify channel width frame format (Notify Channel Width Frame Format) frame.

The second multi-link device 402 may obtain information of the address 3 of the management frame, and read the first address in the address 3, namely, the BSSID of the affiliated AP. With reference to the scenario in FIG. 6, it is assumed that the first address may be the BSSID of the AP 2. In this case, the second multi-link device 402 may apply the management frame to a link (namely, the second link 602) associated with the first address (the BSSID of the AP 2).

It may be understood that, in this embodiment, the link to which the management frame is applied is determined based on the first address (namely, the MAC address of the affiliated AP), and is irrelevant to a link on which the management frame is actually transmitted.

For example, with reference to FIG. 6, it is assumed that the address 1 of the management frame carries the MAC address of the non-AP STA 2, the address 2 of the management frame carries the MAC address of the AP 2, and the address 3 carries the BSSID of the AP 2. In this case, the first multi-link device 401 sends the management frame to the second multi-link device 402 on the second link 602, and the second multi-link device 402 applies the management frame to the second link 602. It may be learned that, in this embodiment, the link on which the management frame is actually transmitted and the link to which the management frame is applied are the same, and both are the second link 602. For another example, it is assumed that the address 1 of the management frame carries the MAC address of the non-AP STA 1, the address 2 of the management frame carries the MAC address of the AP 1, and the address 3 carries the BSSID of the AP 2. In this case, the first multi-link device 401 sends the management frame to the second multi-link device 402 on the first link 601, but the second multi-link device 402 applies the management frame to the second link 602. In other words, the second multi-link device 402 applies, based on the first address, the management frame to a link (the second link 602) other than the link (the first link 601) on which the management frame is transmitted. In this way, the link on which the management frame is transmitted and the link to which the management frame is applied may be the same or different, so that cross-link transmission of the management frame is implemented, and a multi-link feature is fully used. This improves communication efficiency.

It should be noted that, after receiving the management frame, the second multi-link device 402 may determine whether the address in the address 3 of the management frame is all 1s. If yes, the second multi-link device 402 may determine that a wildcard BSSID is in the address 3, and the address 3 does not carry the address indication information. Whether the first address is the MAC address of the AP MLD or the MAC address of the affiliated AP is determined only when the address in the address 3 is not all 1s.

In step 440 of the process 400, the second multi-link device 402 sends a reply acknowledgment frame of the management frame to the first multi-link device 401.

For example, with reference to FIG. 6, the non-AP STA 1 of the non-AP MLD 620 may send an acknowledgment frame to the AP 1 of the AP MLD 610 on the first link 601. In an example, the acknowledgment frame may include positive acknowledgment (ACK).

In the foregoing examples with reference to FIG. 4 to FIG. 6, it is assumed that the first multi-link device 401 is an AP MLD, and the second multi-link device 402 is a non-AP MLD. It may be understood that the first multi-link device 401 may be a non-AP MLD, and the second multi-link device 402 may be an AP MLD. Corresponding descriptions are similar, and details are not described herein again.

According to the foregoing descriptions with reference to FIG. 4 to FIG. 6, in this embodiment of this disclosure, the management frame may include the link indication information, to indicate a link to which the management frame is applied, so that the second multi-link device can apply the management frame to a correct link. This avoids a processing error. In addition, the link indication information may include the address indication information for indicating whether the first address is the MAC address of the AP MLD or the MAC address of the affiliated AP. This solution is applicable even if an MAC address of an MLD is the same as an MAC address of an affiliated station. This solution is more universal, and can reduce signaling overheads. In this embodiment of this disclosure, the management frame may be transmitted across links, so that a multi-link feature can be fully used to effectively use resources. This improves resource usage, and further improves communication efficiency.

It may be learned that this embodiment of this disclosure provides a management frame mechanism for cross-link transmission, so that a multi-link feature can be used to fully use resources. In addition, even if the MAC address of the MLD is the same as the MAC address of the affiliated station, a processing anomaly caused when the type of the management frame cannot be determined does not occur. In another aspect, the cross-link transmission mechanism allows the MLD MAC address of the MLD to be the same as an MAC address of one affiliated station. This reduces overheads for a quantity of MAC addresses, and reduces chip costs. Specifically, in this embodiment of this disclosure, the address indication information indicates the first address. This reduces signaling overheads, and can ensure normal processing. In addition, the link-level management frame indicates, at least based on the first address, a link to which the management frame is applied. This avoids that the management frame is applied to an incorrect link due to cross-link transmission. The MLD-level management frame may indicate, based on the additional link information, some links to which the management frame is applied. This expands an application scope, and ensures communication performance.

In another embodiment, the address 3 of the management frame always carries the MAC address of the AP. In other words, the address 3 in any management frame carries the MAC address of the AP, and there is no possibility of carrying the MAC address of the AP MLD. The MAC address of the AP may be the MAC address of the affiliated AP, or may be an MAC address of a single-link AP. The address indication information may indicate the type of the management frame. Specifically, the address indication information is the first value indicating that the management frame is the MLD-level management frame, and the address indication information is the second value indicating that the management frame is the link-level management frame. The first value is different from the second value. For example, the first value is 1, and the second value is 0. For another example, the first value is 0, and the second value is 1.

Further, the MAC address of the AP is an MAC address of an AP for transmitting the management frame or an MAC address of another AP other than the MAC address of the AP for transmitting the management frame in the same AP MLD.

The MAC address of the AP is the MAC address of the AP for transmitting the management frame. The link identifier information carried in the management frame is consistent with the foregoing description "the link-level management frame is specific to a specific link, and may be applied to the specific link". Details are not described herein again.

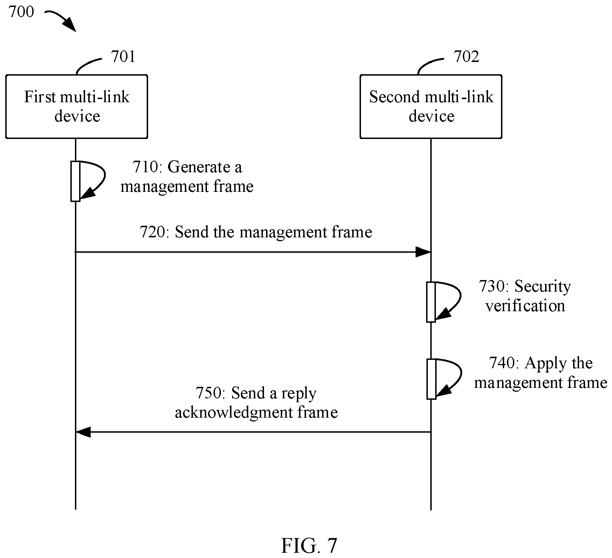

The MAC address of the AP is the MAC address of another AP other than the MAC address of the AP for transmitting the management frame in the same AP MLD. The link identifier information carried in the management frame is consistent with the foregoing description "the link-level management frame is specific to a specific link, and may be applied to the specific link". Details are not described herein again. FIG. 7 is another signaling interaction diagram of a data transmission process 700 according to an embodiment of this disclosure. The process 700 includes to a first multi-link device 701 and a second multi-link device 702. The first multi-link device 701 may be an AP MLD or a non-AP MLD. Correspondingly, the second multi-link device 702 may be a non-AP MLD or an AP MLD.

For ease of description, in the following descriptions, it may be assumed that the first multi-link device 701 is the AP MLD 610 shown in FIG. 6, and it is assumed that the second multi-link device 702 is the non-AP MLD 620 shown in FIG. 6. It may be understood that the communication process shown in FIG. 7 is only an example rather than a limitation. In this embodiment of this disclosure, interaction signaling that is not shown in FIG. 7 may be included, or some signaling shown in FIG. 7 is omitted.

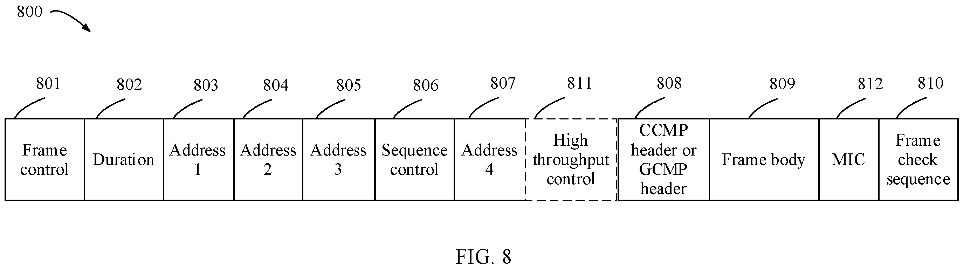

In step 710 of the process 700, the first multi-link device 701 may first generate a management frame. The management frame may be a robust management frame, or referred to as a protected management frame or an encrypted management frame, and may have a format shown in FIG. 8.

FIG. 8 is another schematic diagram of a format 800 of a management frame according to an embodiment of the disclosure. The format 800 includes frame control (Frame Control) 801, duration (Duration) 802, address 1 (Address 1) 803, address 2 (Address 2) 804, address 3 (Address 3) 805, sequence control (Sequence Control) 806, address 4 (Address 4) 807, counter mode cipher-block chaining message authentication code protocol (Counter mode Cipher-Block Chaining Message Authentication Code (CBC-MAC) Protocol, CCMP) header or Galois/counter mode protocol (Galois/Counter Mode Protocol, GCMP) header 808, frame body (Frame Body) 809, message integrity check (MIC) 812, and frame check sequence (Frame Check Sequence, FCS) 810. The frame body 809 may include an MMPDU. Additionally or optionally, the format 800 may further include high throughput control (High Throughput Control, HT Control) 811.

For example, the frame control 801 may include a plurality of subfields, for example, protocol version (Protocol Version), frame type (Type), subtype (Subtype), from distributed system (From Distributed System, From DS), to distributed system (To DS), retry (Retry), power management (Power Management), and more data (More Data). For example, the frame type "00" indicates the management frame.

For example, the duration 802 may indicate the transmission opportunity duration. The address 1 803, the address 2 804, the address 3 805, and the address 4 807 may be collectively referred to as an address field. The frame body 509 may carry specific information. The FCS 810 may be used for error detection. For example, the FCS 810 may include 32-bit cyclic redundancy check (Cyclic Redundancy Check, CRC). The HT control 811 may include aggregated control (Aggregated Control, A-Control), and further include a control list and padding.

It may be understood that, for elements with similar reference numerals in FIG. 8, refer to the foregoing descriptions of the similar elements in FIG. 5. Details are not described herein again.

The management frame may include a receiver address, a transmitter address, and link indication information. The link indication information may indicate at least one link to which the management frame is applied.

In some examples, the link indication information may include a first address and address indication information. In some other examples, the link indication information may include a first address, and the first address includes address indication information. In other words, the address indication information is located in the first address. The address indication information indicates whether the first address is an MAC address of an AP MLD or an MAC address of an affiliated AP. Specifically, the address indication information is a first value indicating that the first address is the MAC address of the AP MLD, and the address indication information is a second value indicating that the first address is the MAC address of the affiliated AP.

If the address indication information is the first value and the first address is the MAC address of the AP MLD, the link indication information may further include link identifier information. For example, the link identifier information is carried in an element of the management frame. Alternatively, the management frame may not carry any link identifier information.

Specifically, for a specific embodiment of the receiver address, the transmitter address, and the link indication information, refer to the foregoing descriptions with reference to FIG. 4. For brevity, details are not described herein again.

In an implementation, the MIC 812 of the management frame in the format 800 shown in FIG. 8 may be generated based on additional authentication data (Additional Authentication Data, AAD) constructed by the first multi-link device 701. It should be understood that, a process of constructing and/or parsing the ADD and a corresponding process of generating and/or parsing MIC provided in this embodiment of this disclosure may be separately implemented, or may be combined with the process of generating and sending the management frame provided in the foregoing embodiment.

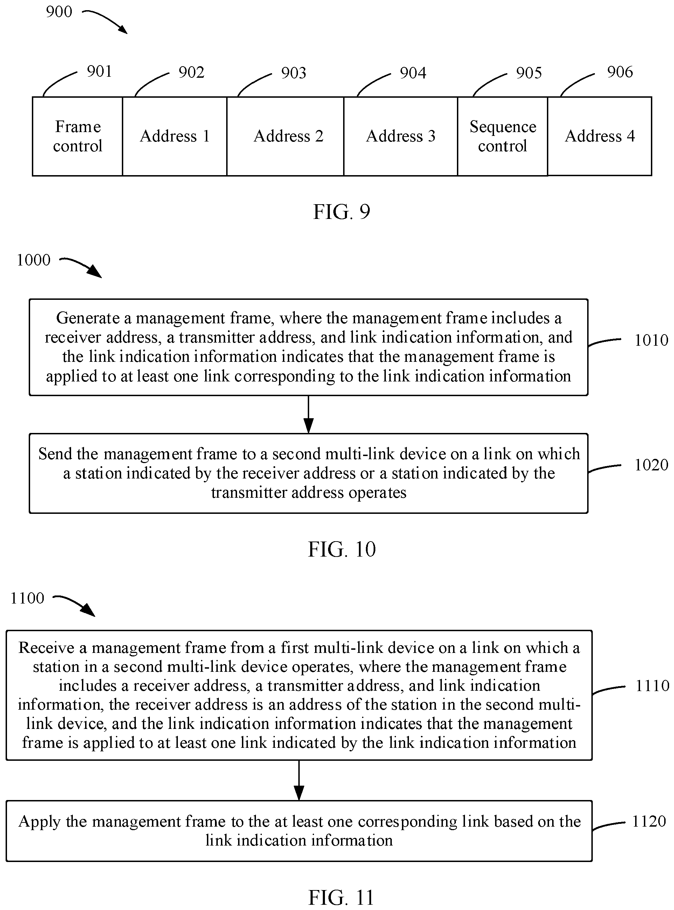

FIG. 9 is a schematic diagram of a format 900 of AAD according to an embodiment of the disclosure. The format 900 includes frame control (Frame Control) 901, address 1 902, address 2 903, address 3 904, sequence control (Sequence Control) 905, and address 4 906.

For example, the frame control 901 may be generated based on a portion of the frame control 801. For example, a portion (for example, subtype, retry, and more data) of the frame control 801 may be excluded, and then the frame control 901 is generated. In other words, the excluded portion is masked (mask) to 0. For example, the sequence control 905 may be consistent with the sequence control 806, and the address 4 906 may be consistent with the address 4 807. In an implementation, for a specific method for constructing the frame control 901, the address 1 902, the sequence control 905, and the address 4 906 of the AAD, refer to the existing protocol 802.11-2021.

In some embodiments of this disclosure, an address carried in the address 1 902 is the same as that in the address 1 803, an address carried in the address 2 903 is the same as that in the address 2 804, and an address carried in the address 3 904 is the same as that in the address 3 805.

Specifically, the address 1 902 in the format 900 may carry the receiver address of the management frame, the address 2 903 may carry the transmitter address of the management frame, and the address 3 904 may carry a second address. It may be understood that the management frame herein may be a management frame corresponding to the AAD, or may be the management frame described in the foregoing embodiment. For example, if the management frame is sent from the AP MLD to the non-AP MLD, namely, if the transmission direction is downlink, the address 1 902 may carry the MAC address of the non-AP STA, and the address 2 903 may carry the MAC address of the AP. If the management frame is sent from the non-AP MLD to the AP MLD, namely, if the transmission direction is uplink, the address 1 902 may carry the MAC address of the AP, and the address 2 903 may carry the MAC address of the non-AP STA. In addition, regardless of uplink or downlink, the address 3 904 carries the second address.

In addition, during air interface transmission, if the address 1 803 and the address 2 804 of the management frame carry an address of a corresponding link on which the management frame is transmitted. In this case, the address 1 902 and the address 2 903 of the AAD may also carry an address of a corresponding link on which the management frame is transmitted, as shown in Table 2.

**Table 2**

| | | Transmission direction | Address 1 | Address 2 | Address 3 |
|---|---|---|---|---|---|
| AAD | MLD-level management frame | Downlink | MAC address of a non-AP STA | MAC address of an AP | MAC address of an AP MLD |
| | | Uplink | MAC address of an AP | MAC address of a NON-AP STA | MAC address of an AP MLD |
| | Link-level management frame | Downlink | MAC address of a non-AP STA | MAC address of an AP | BSSID of an affiliated AP |
| | | Uplink | MAC address of an AP | MAC address of a non-AP STA | BSSID of an affiliated AP |

In some other embodiments of this disclosure, the address 1 902 and the address 2 903 in the format 900 carry a corresponding MAC address of an MLD, and are not replaced with a corresponding link address even during air interface transmission. In other words, in this embodiment, during air interface transmission, the address carried in the address 1 902 and the address carried in the address 2 903 are still the MAC address.

However, in this embodiment, an address carried in the address 3 904 is the same as that in the address 3 805. In other words, the second address is the same as the first address.

Specifically, if the management frame is an MLD-level management frame, the first address is the MAC address of the AP MLD. When the AAD is constructed, the second address in the address 3 904 of the AAD is also the MAC address of the AP MLD. If the management frame is a link-level management frame, the first address is a BSSID of the AP, and may be a BSSID of the affiliated AP or a BSSID of an AP not affiliated with the AP MLD. When the AAD is constructed, the second address in the address 3 904 of the AAD is also a BSSID of the AP, and may be a BSSID of the affiliated AP or a BSSID of the AP not affiliated with the AP MLD. Correspondingly, the address 1, the address 2, and the address 3 of the AAD may be described in Table 3 below.

**Table 3**

| | | Transmission direction | Address 1 | Address 2 | Address 3 |
|---|---|---|---|---|---|
| AAD | MLD-level management frame | Downlink | MAC address of a non-AP MLD | MAC address of an AP MLD | MAC address of an AP MLD |
| | | Uplink | MAC address of an AP MLD | MAC address of a non-AP MLD | MAC address of an AP MLD |
| | Link-level management frame | Downlink | MAC address of a non-AP MLD | MAC address of an AP MLD | BSSID of an AP |
| | | Uplink | MAC address of an AP MLD | MAC address of a non-AP MLD | BSSID of an AP |

It may be understood that, in this embodiment, because the address 1 and the address 2 of the AAD are the corresponding MAC address of the MLD, the corresponding management frame is allowed to be transmitted across links, and even if the management frame is not transmitted on a target link, re-encryption is not needed. In this manner, a multi-link feature can be fully used, and transmission flexibility is improved, so that link resources can be effectively used. This improves communication efficiency.

In the foregoing descriptions of the management frame, the management frame includes the link indication information, and the link indication information includes the address indication information.

In some embodiments of this disclosure, the address indication information is carried in the address 3 field of the management frame. In other words, the first address includes the address indication information.

In an example, an address in the address 3 904 of the AAD may be the same as the address in the address 3 of the management frame. In other words, the second address of the AAD also includes the address indication information.

In another example, the first address of the management frame is always set to the MAC address of the AP, and the second address is always set to the MAC address of the AP.

In another example, an address in the address 3 904 of the AAD is not necessarily identical with the address in the address 3 of the management frame. In other words, the second address of the AAD does not include the address indication information. Specifically, if the address indication information is the first value (for example, 1), when the AAD is constructed, the address indication information in the address 3 field of the management frame is reset to a default value (for example, 0) and used as the second address in the address 3 904 of the AAD. If the address indication information is the second value (for example, 0), when the AAD is constructed, the address indication information in the address 3 field of the management frame is kept at 0 and used as the second address in the address 3 904 of the AAD. It may be understood that, in this case, a meaning of the first address may still be determined based on the address indication information in the management frame. Optionally, the type of the management frame is determined. Optionally, in this embodiment, the second address does not include the address indication information, but the AAD may carry the address indication information by using another location or bit. In other words, the AAD includes the address indication information, and the address indication information is carried in an I/G bit of the address 2 of the AAD, or is carried in the From DS and the To DS of the frame control of the AAD, and the like.

In some other embodiments of this disclosure, the address indication information is carried in the address 2 field of the management frame.

In an example, an address in the address 3 904 of the AAD is not necessarily identical with the address in the address 3 of the management frame. In other words, the second address of the AAD includes the address indication information. Specifically, if the address indication information in the address 2 field of the management frame is the first value (for example, 1), when the AAD is constructed, the address indication information in the address 3 field of the management frame is reset to 1 and used as the second address in the address 3 904 of the AAD. If the address indication information in the address 2 field of the management frame is the second value (for example, 0), when the AAD is constructed, the address indication information in the address 3 field of the management frame is kept at 0 and used as the second address in the address 3 904 of the AAD. In other words, in this embodiment of this disclosure, an I/G bit of the second address carried in the address 3 field of the AAD may be set to a value of the address indication information. A default value of the I/G bit of the second address may be 0. If the address indication information is the first value (1), the I/G bit of the second address is reset to 1. If the address indication information is the second value (0), the I/G bit of the second address is kept at 0.

In another example, an address in the address 2 903 of the AAD may be identical with the address in the address 2 of the management frame. In other words, the AAD also includes the address indication information. In another example, an address in the address 2 903 of the AAD is not necessarily the same as the address in the address 2 of the management frame. In other words, the AAD does not include the address indication information. Specifically, if the address indication information in the address 2 of the management frame is the first value (for example, 1), when the AAD is constructed, the address indication information in the address 2 field of the management frame is reset to a default value (for example, 0) and used as the address in the address 2 903 of the AAD. If the address indication information in the address 2 of the management frame is the second value (for example, 0), when the AAD is constructed, the address indication information in the address 2 field of the management frame is kept at 0 and used as the address in the address 2 903 of the AAD. It may be understood that, in this case, a meaning of the first address may still be determined based on the address indication information in the address 2 of the management frame. Optionally, the type of the management frame is determined.

Further, the first multi-link device 701 may generate the MIC 812 by using an encryption algorithm based on the constructed AAD and the frame body 809.

In step 720 of the process 700, the first multi-link device 701 sends the management frame to the second multi-link device 702. Specifically, the first multi-link device 701 may send the management frame to the second multi-link device 702 on a link between the address 1 and the address 2 of the management frame.

For step 720 in FIG. 7, refer to the foregoing descriptions of step 420 in FIG. 4. For brevity, details are not described herein again.

In step 730 of the process 700, the second multi-link device 702 performs security verification on the received management frame.

In some embodiments, the second multi-link device 702 may construct the AAD based on the received management frame. Then, the second multi-link device 702 may generate second MIC based on the constructed AAD and the frame body of the management frame, and perform security verification on the received management frame based on MIC (referred to as first MIC) of the management frame and the second MIC.

It should be understood that, a process in which the second multi-link device 702 constructs the AAD to obtain the second MIC may be independently implemented. In other words, the process may be separated from a process in which the second multi-link device 702 receives the management frame. Alternatively, a process in which the second multi-link device 702 constructs the AAD to obtain the second MIC may be implemented in combination with a process in which the second multi-link device 702 receives the management frame and applies the management frame to at least one link.

The AAD constructed by the second multi-link device 702 may have a format similar to the format 900 shown in FIG. 9. Specifically, a manner in which the second multi-link device constructs the AAD is similar to a manner in which the first multi-link device 701 constructs the AAD shown in FIG. 9. For details, refer to the foregoing descriptions. For brevity, details are not described herein again.

After constructing the AAD, the second multi-link device 702 may generate the second MIC based on the constructed AAD and the frame body of the received management frame. Then, the second multi-link device 702 may compare the MIC (referred to as the first MIC) of the received management frame with the generated second MIC. If the two MIC fields are the same, it indicates that the management frame is not tampered with, and subsequent processing may be performed. On the contrary, if the two MIC fields are different, it indicates that the management frame is tampered with.

In step 740 of the process 700, the second multi-link device 702 applies the received management frame to indicated one or more links.

Specifically, if security is verified in step 730, for example, if the first MIC is consistent with the second MIC, step 740 is performed.

As described above, the link indication information of the management frame includes the first address. The first address includes the address indication information. In other words, the address indication information is located in the first address. Alternatively, the link indication information of the management frame includes the first address and the address indication information.

In some embodiments, if the address indication information is the first value (for example, 1), the second multi-link device 402 may determine that the first address is the MAC address of the AP MLD. Optionally, it may be further determined that the management frame is the MLD-level management frame.

If the first address includes the address indication information, the second multi-link device 402 may obtain information carried in the address 3 field of the management frame, and reset the I/G bit to 0, to read the first address in the address 3, namely, the MAC address of the AP MLD. With reference to the scenario in FIG. 6, the first address may be an MAC address of the AP MLD 610.

Further, the second multi-link device 402 may determine whether the management frame carries the link indication information.

If the management frame does not carry the link identifier information, the second multi-link device 402 may apply the management frame to all the links (for example, the first link 601, the second link 602, and the third link 603) that establish an association between the first multi-link device 401 and the second multi-link device 402. In an example, the management frame may be an add block acknowledgment (ADD Block ACK, ADDBA) request frame or an add block acknowledgment response frame.

If the management frame carries the link identifier information, the second multi-link device 402 may apply the management frame to the one or more links indicated by the link identifier information. For example, with reference to FIG. 6, if the management frame includes the link identifier information of the first link 601 and the second link 602, the management frame may be applied to the first link 601 and the second link 602. In an example, the management frame may be a target wake time (Target Wake Time, TWT) setup frame, where a TWT element in the TWT setup frame carries the link identifier information, and the link identifier information indicates one or more links to be applied.

For example, the management frame includes at least one element. If the first element carries the link identifier information, the second multi-link device 402 may apply the first element to the one or more links indicated by the link identifier information. If the second element does not carry the link identifier information, the second multi-link device 402 may apply the second element to all the links that establish an association between the first multi-link device 401 and the second multi-link device 402. In another implementation, if the second element does not carry the link identifier information, the second multi-link device 402 may apply the second element to a link on which the element is transmitted.

In some other embodiments, if the address indication information is the second value (for example, 0), the second multi-link device 402 may determine that the first address is the MAC address of the affiliated AP. Optionally, it may be further determined that the management frame is the link-level management frame. Further, the second multi-link device 402 may apply the management frame to a link on which the affiliated AP operates. In an example, the management frame may be a notify channel width frame format (notify channel width frame format) frame. The second multi-link device 402 may obtain information of the address 3 of the management frame, and read the first address in the address 3, namely, the BSSID of the affiliated AP. With reference to the scenario in FIG. 6, it is assumed that the first address may be the BSSID of the AP 2. In this case, the second multi-link device 402 may apply the management frame to a link (namely, the second link 602) associated with the first address (the BSSID of the AP 2).

It may be understood that, in this embodiment, the link to which the management frame is applied is determined based on the first address (namely, the MAC address of the affiliated AP), and is irrelevant to a link on which the management frame is actually transmitted.

For example, with reference to FIG. 6, it is assumed that the address 1 of the management frame carries the MAC address of the non-AP STA 2, the address 2 of the management frame carries the MAC address of the AP 2, and the address 3 carries the BSSID of the AP 2. In this case, the first multi-link device 401 sends the management frame to the second multi-link device 402 on the second link 602, and the second multi-link device 402 applies the management frame to the second link 602. It may be learned that, in this embodiment, the link on which the management frame is actually transmitted and the link to which the management frame is applied are the same, and both are the second link 602. For another example, it is assumed that the address 1 of the management frame carries the MAC address of the non-AP STA 1, the address 2 of the management frame carries the MAC address of the AP 1, and the address 3 carries the BSSID of the AP 2. In this case, the first multi-link device 401 sends the management frame to the second multi-link device 402 on the first link 601, but the second multi-link device 402 applies the management frame to the second link 602. In other words, the second multi-link device 402 applies, based on the first address, the management frame to a link (the second link 602) other than the link (the first link 601) on which the management frame is transmitted. In this way, the link on which the management frame is transmitted and the link to which the management frame is applied may be the same or different, so that cross-link transmission of the management frame is implemented, and a multi-link feature is fully used. This improves communication efficiency.

In step 750 of the process 700, the second multi-link device 702 sends a reply acknowledgment frame of the management frame to the first multi-link device 701. If a receive end of the management frame is a single-link station, the single-link station replies the acknowledgment frame to the first multi-link device 701.

For example, with reference to FIG. 6, the non-AP STA 1 of the non-AP MLD 620 may send the acknowledgment frame to the AP 1 of the AP MLD 610 on the first link 601. In an example, the acknowledgment frame may include positive acknowledgment (ACK).

In the foregoing examples, it is assumed that the first multi-link device 701 is an AP MLD, and the second multi-link device 702 is a non-AP MLD. It may be understood that the first multi-link device 701 may be a non-AP MLD, and the second multi-link device 702 may be an AP MLD. Corresponding descriptions are similar, and details are not described herein again.

According to the foregoing descriptions, in this embodiment of this disclosure, the management frame may include the link indication information, to indicate a link to which the management frame is applied, so that the second multi-link device can apply the management frame to a correct link. This avoids a processing error. In addition, the link indication information may include the address indication information for indicating whether the first address is the MAC address of the AP MLD or the MAC address of the affiliated AP. This solution is applicable even if an MAC address of an MLD is the same as an MAC address of an affiliated station. This solution is more universal and can reduce signaling overheads. In another aspect, the cross-link transmission mechanism allows the MLD MAC address of the MLD to be the same as an MAC address of one affiliated station. This reduces overheads for a quantity of MAC addresses, and reduces chip costs. In this embodiment of this disclosure, the management frame may be transmitted across links, so that a multi-link feature can be fully used to effectively use resources. This improves resource usage, and further improves communication efficiency.

FIG. 10 is a schematic flowchart of a data transmission method 1000 according to an embodiment of this disclosure. The method 1000 may be performed by a first multi-link device. For example, the first multi-link device may be implemented as the AP MLD 610 in FIG. 6 or the non-AP MLD 620 in FIG. 6.

The method 1000 begins at block 1010. In step 1010, the first multi-link device generates a management frame. The management frame includes a receiver address, a transmitter address, and link indication information. The link indication information indicates that the management frame is applied to at least one link corresponding to the link indication information.

For example, the management frame may have the format 500 shown in FIG. 5, or may have the format 800 shown in FIG. 8 under protection. The link indication information may include a first address. The first address is carried in an address 3 field of the management frame. In addition, the receiver address may be carried in an address 1 field of the management frame. The transmitter address is carried in an address 2 field of the management frame.

In some examples, the first address may include address indication information. For example, the address indication information is carried in an I/G bit of an MAC address in the address 3 field of the management frame.

In some other examples, the link indication information may include a first address and address indication information. For example, the address indication information is carried in an I/G bit or another location of an MAC address in the address 2 field of the management frame.

In this embodiment of this disclosure, the address indication information may indicate whether the first address is an MLD MAC address of an AP MLD or an MAC address of an AP affiliated with the AP MLD. Specifically, if the address indication information is the first value (for example, 1), it indicates that the first address is the MLD MAC address of the AP MLD. If the address indication information is the second value (for example, 0), it indicates that the first address is the MAC address of the AP affiliated with the AP MLD, for example, may be a BSSID of the AP affiliated with the AP MLD.

In a case, the address indication information is the first value, and the first address is the MLD MAC address of the AP MLD. The link indication information may further include link identifier information or do not include any link identifier information.

Specifically, the link indication information includes the link identifier information, indicating a link to which the management frame is applied. The link indication information does not include the link identifier information, indicating that the management frame is applied to all links that establish an association between the first multi-link device and a second multi-link device.

In this embodiment of this disclosure, "applied to a link (applied to a link)" may be understood as target at a link (target at a link), or applied to stations at two ends of a link, and is collectively described as applied to a link in the following descriptions.

In an example, the management frame includes at least one element. The link identifier information may be carried in a first element of the management frame, indicating that the first element is applied to the one or more links indicated by the link identifier information.

In another example, the management frame includes at least one element. A second element of the management frame does not carry any link identifier information, indicating that the second element is applied to all links that establish an association between the first multi-link device and the second multi-link device.

For example, the link identifier information may be at least one of the following: one or more link IDs or a link ID bitmap.

In another case, the address indication information is the second value, and the first address is the MAC address of the AP affiliated with the AP MLD. In this case, the management frame is applied to a link on which the affiliated AP operates.

In some embodiments, if the protected management frame shown in FIG. 8 is generated, when the management frame is generated, AAD may be further constructed, where the AAD includes a second address. MIC is generated based on the constructed AAD. Then, the management frame is generated based on the MIC.

The constructed AAD may have the format 900 shown in FIG. 9. The second address may be carried in an address 3 field of the AAD.

In an example, when the AAD is constructed, the second address of the AAD may be consistent with the first address of the management frame. Specifically, if the first address is the MLD MAC address of the AP MLD, the second address is also the MLD MAC address of the AP MLD. If the first address is the MAC address of the AP affiliated with the AP MLD, the second address is also the MAC address of the AP affiliated with the AP MLD. If the first address is an MAC address of a single-link AP or an MAC address of an AP not affiliated with any AP MLD, the second address is also an MAC address of the AP not affiliated with any AP MLD.

In this embodiment, if the first address includes the address indication information, correspondingly the second address also includes the address indication information. If the first address does not include the address indication information, correspondingly the second address does not include the address indication information either. In other words, the address 3 of the AAD is consistent with the address 3 field of the management frame in air interface transmission.

In another example, if the first address includes the address indication information, when the AAD is constructed, the address indication information in the first address may be reset to a default value (for example, 0) and then used as the second address of the AAD.

In this embodiment, although the first address includes the address indication information, the second address does not include the address indication information.

In still another example, the AAD may include address indication information that is carried in an I/G bit of an address 2 or an address 3 of the AAD. Similar to the foregoing embodiment in which the management frame includes the address indication information, details are not described herein again.

In this way, the first multi-link device may construct the AAD, and may further generate the MIC based on this. Specifically, the management frame generated in step 1010 includes the MIC.

It may be understood that a specific purpose of the management frame is not limited in this embodiment of this disclosure. For example, the management frame may be any one of the following: an add block acknowledgment request frame, an add block acknowledgment response frame, a notify channel width frame format frame, a target wake time setup frame, a channel switching request frame, and a transmit power control (Transmit Power Control, TPC) request frame.

For step 1010, refer to the related descriptions of step 410 in FIG. 4 and step 710 in FIG. 7. For brevity, details are not described herein again.

In step 1020, the first multi-link device sends the management frame on a link on which a station indicated by the receiver address or a station indicated by the transmitter address operates. For example, the management frame may be sent to the second multi-link device, or the management frame may be sent to a single-link station.

For step 1020, refer to the related descriptions of step 420 in FIG. 4 and step 720 in FIG. 7. For brevity, details are not described herein again.

Optionally, after step 1020, the first multi-link device may further receive a response, for example, a reply acknowledgment frame, to the management frame from the second multi-link device or the single-link station.

In this way, in this embodiment of this disclosure, the management frame may include the link indication information, to indicate a link to which the management frame is applied, so that the second multi-link device can apply the management frame to a correct link when a receive end device is the second multi-link device. This avoids a processing error.

The link indication information may include the address indication information for indicating whether the first address is the MLD MAC address of the AP MLD or the MAC address of the AP. In an implementation, the MAC address of the AP is the MAC address of the AP affiliated with the AP MLD. This solution is applicable even if an MAC address of an MLD is the same as an MAC address of an affiliated station. This solution is more universal, and can reduce signaling overheads. In this embodiment of this disclosure, the management frame may be transmitted across links, so that a multi-link feature can be fully used to effectively use resources. This improves resource usage, and further improves communication efficiency. In another implementation, the MAC address of the AP is an MAC address of a single-link AP or an MAC address of an AP not affiliated with an AP MLD.

FIG. 11 is another schematic flowchart of a data transmission method 1100 according to an embodiment of this disclosure. The method 1100 may be performed by a second multi-link device. For example, the second multi-link device may be implemented as the AP MLD 610 in FIG. 6 or the non-AP MLD 620 in FIG. 6.

The method 1100 begins at block 1110. In step 1110, the second multi-link device receives a management frame from a first multi-link device on a link on which a station in the second multi-link device operates. The management frame includes a receiver address, a transmitter address, and link indication information. The receiver address is an address of the station in the second multi-link device. The link indication information indicates that the management frame is applied to at least one link indicated by the link indication information.

For example, the management frame may have the format 500 shown in FIG. 5, or may have the format 800 shown in FIG. 8 under protection. The link indication information may include a first address. The first address is carried in an address 3 field of the management frame. In addition, the receiver address may be carried in an address 1 field of the management frame. The transmitter address is carried in an address 2 field of the management frame.

In some examples, the first address may include address indication information. For example, the address indication information is carried in an I/G bit of an MAC address in the address 3 field of the management frame.

In some other examples, the link indication information may include a first address and address indication information. For example, the address indication information is carried in an I/G bit or another location of an MAC address in the address 2 field of the management frame.

In this embodiment of this disclosure, the address indication information may indicate whether the first address is an MLD MAC address of an AP MLD or an MAC address of an AP in the AP MLD, and specifically an MAC address of an AP affiliated with the AP MLD. Specifically, if the address indication information is a first value (for example, 1), it indicates that the first address is the MLD MAC address of the AP MLD. If the address indication information is a second value (for example, 0), it indicates that the first address is the MAC address of the AP affiliated with the AP MLD, for example, may be a BSSID of the AP affiliated with the AP MLD.

In a case, the address indication information is the first value, the first address is not all 1s, and the first address is the MLD MAC address of the AP MLD. The link indication information may further include link identifier information or do not include any link identifier information.

Specifically, the link indication information includes the link identifier information, indicating a link to which the management frame is applied. The link indication information does not include the link identifier information, indicating that the management frame is applied to all links that establish an association between the first multi-link device and the second multi-link device.

In an example, the management frame includes at least one element. A first element of the management frame carries the link identifier information. In another example, the management frame includes at least one element. A second element of the management frame does not carry any link identifier information.

For example, the link identifier information may be at least one of the following: one or more link IDs or a link ID bitmap.

In another case, the address indication information is the second value, and the first address is the MAC address of the AP, and specifically the MAC address of the AP affiliated with the AP MLD.

In some embodiments, if the protected management frame shown in FIG. 8 is received in step 1110, the management frame may further include first MIC.

In an implementation, for an embodiment of the management frame, refer to related descriptions in the foregoing embodiment. For brevity, details are not described herein again.

In step 1120, the second multi-link device applies the management frame to the at least one corresponding link based on the link indication information.

In some embodiments, if the received management frame includes the first MIC, before step 1120, the second multi-link device further performs security verification on the management frame. It should be understood that, the following described process in which the second multi-link device constructs ADD to obtain second MIC and performs security verification may be independently implemented, or may be implemented in combination with the foregoing process of receiving the management frame and the foregoing process of applying the management frame to the at least one corresponding link in step 1120.

Specifically, the second multi-link device may construct the AAD based on the management frame, where the AAD includes the second address; generate the second MIC based on the AAD; and perform security verification on the management frame based on the first MIC and the second MIC.

In an example, when the AAD is constructed, the second address of the AAD may be consistent with the first address of the management frame. Specifically, if the first address is the MLD MAC address of the AP MLD, the second address is also the MLD MAC address of the AP MLD. If the first address is the MAC address of the AP affiliated with the AP MLD, the second address is also the MAC address of the AP affiliated with the AP MLD.

If the first address is an MAC address of a single-link AP, or an MAC address of an AP not affiliated with any AP MLD, the second address is also an MAC address of the single-link AP, or an MAC address of an AP not affiliated with any AP MLD.

In this embodiment, if the first address includes the address indication information, correspondingly the second address also includes the address indication information. If the first address does not include the address indication information, correspondingly the second address does not include the address indication information either.

In another example, if the first address includes the address indication information, when the AAD is constructed, the address indication information in the first address may be reset to a default value (for example, 0) and then used as the second address of the AAD.

In this embodiment, although the first address includes the address indication information, the second address does not include the address indication information.

In this way, the second multi-link device may construct the AAD, and may further generate the second MIC based on this.

The second multi-link device may compare the generated second MIC with the first MIC in the received management frame, to verify security of the management frame. For example, if the first MIC is different from the second MIC, it indicates that the management frame is tampered with. If the first MIC is the same as the second MIC, it indicates that the management frame is not tampered with, and may be further processed.

In some examples, if security is verified, namely, if it is determined that the management frame is not tampered with, step 1120 is performed.

In some embodiments, if the address indication information is the first value (for example, 1), the second multi-link device may determine that the first address is the MLD MAC address of the AP MLD. Optionally, it may be further determined that the management frame is an MLD-level management frame.

If the first address includes the address indication information, the second multi-link device may obtain information carried in the address 3 field of the management frame, and reset the I/G bit to 0, to read the first address in the address 3, namely, the MLD MAC address of the AP MLD.

Further, the second multi-link device may determine whether the management frame carries the link indication information.

If the management frame does not carry the link identifier information, the second multi-link device may apply the management frame to all the links that establish an association between the first multi-link device and the second multi-link device. In an example, the management frame may be an add block acknowledgment request frame or an add block acknowledgment response frame.

If the management frame carries the link identifier information, the second multi-link device may apply the management frame to one or more links indicated by the link identifier information. In an example, the management frame may be a TWT setup frame, where a TWT element in the TWT setup frame carries the link identifier information, and the link identifier information indicates one or more links to be applied.

For example, the management frame includes at least one element. If the first element carries the link identifier information, the second multi-link device may apply the first element to the one or more links indicated by the link identifier information. If the second element does not carry the link identifier information, the second multi-link device may apply the second element to all the links that establish an association between the first multi-link device and the second multi-link device.

In some other embodiments, if the address indication information is the second value (for example, 0), the second multi-link device may determine that the first address is the MAC address of the AP affiliated with the AP MLD or the MAC address of the single-link AP, or the MAC address of the AP not affiliated with any AP MLD. Optionally, it may be further determined that the management frame is a link-level management frame. Further, the second multi-link device may apply the management frame to a link on which the AP affiliated with the AP MLD operates, or apply the management frame to a link on which the single-link AP or the AP not affiliated with any AP MLD operates. In an example, the management frame may be a notify channel width frame format frame.

For step 1120, refer to the related descriptions of step 430 in FIG. 4 and step 740 in FIG. 7. For brevity, details are not described herein again.

Optionally, after step 1120, the second multi-link device may further send, to the first multi-link device, a response to the management frame, for example, a reply acknowledgment frame.

Specifically, the second multi-link device may send the reply acknowledgment frame on a link on which the management frame is received. For example, the reply acknowledgment frame may be sent on a link between the receiver address and the transmitter address of the management frame.

In this way, in this embodiment of this disclosure, the management frame received by the second multi-link device includes the link indication information for indicating a link to which the management frame is applied. In this way, even in a cross-link transmission scenario, the management frame can be applied to a correct link. This ensures correct processing and avoids a communication error.

It should be noted that, although the foregoing example describes in detail that the address indication information is carried in the I/G bit of the address 3 of the management frame, this disclosure is not limited thereto. For example, the address indication information may alternatively be carried in the I/G bit of the address 2 of the management frame, or the address indication information may be carried in From DS and To DS of frame control of the management frame, or another location or bit. In addition, a person skilled in the art may similarly obtain specific implementations in which the address indication information is carried in another location or bit. These specific implementations all fall within the protection scope of this disclosure.

It should be understood that, in embodiments of this disclosure, "first", "second", "third", and the like are only intended to indicate that a plurality of objects may be different, but two objects may be the same. The "first", "second", "third", and the like should not be construed as a limitation on embodiments of this disclosure.

It should be further understood that division into the manners, cases, categories, and embodiments in embodiments of this application is only intended for ease of description, and should not constitute a particular limitation. The features in the manners, categories, cases, and embodiments may be combined with each other if logical.

It should be further understood that, the foregoing content is only intended to help a person skilled in the art better understand embodiments of this application, instead of limiting the scope of embodiments of this application. A person skilled in the art may make various modifications, changes, combinations, or the like according to the foregoing content. A modified, changed, or combined solution also falls within the scope of embodiments of this application.

It should be further understood that "one embodiment" or "an embodiment" mentioned in the entire specification means that particular features, structures, or characteristics related to the embodiment are included in at least one embodiment of the present invention. Therefore, "in one embodiment" or "in an embodiment" appearing in the specification does not refer to a same embodiment. In addition, these particular features, structures, or characteristics may be combined in one or more embodiments by using any appropriate manner. Sequence numbers of the foregoing processes do not mean execution sequences in various embodiments of the present invention. The execution sequences of the processes should be determined according to functions and internal logic of the processes, and should not be construed as any limitation on the implementation processes of embodiments of the present invention.

It should be further understood that the descriptions of the foregoing content focus on emphasizing a difference between the embodiments, and for the same or similar content of the embodiments, reference may be made to each other. For simplicity, details are not further described herein.

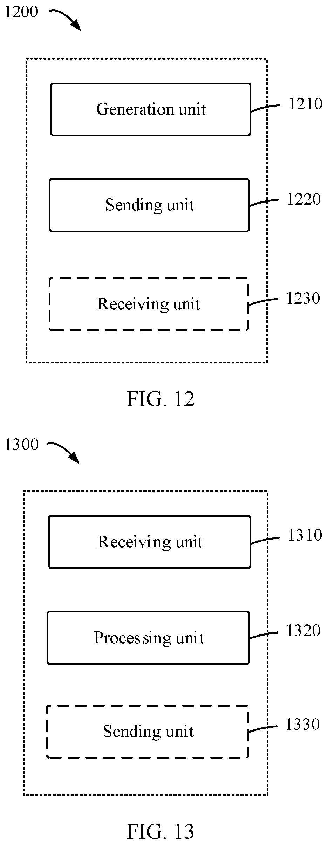

FIG. 12 is another schematic block diagram of a communication apparatus 1200 according to an embodiment of this disclosure. The apparatus 1200 may be implemented in a first multi-link device, or may be implemented as a chip or a chip system in the first multi-link device. The scope of this disclosure is not limited in this aspect.

As shown in FIG. 12, the apparatus 1200 includes a generation unit 1210 and a sending unit 1220. The generation unit 1210 may be configured to generate a management frame. The management frame includes a receiver address, a transmitter address, and link indication information. The link indication information indicates at least one link to which the management frame is applied. The sending unit 1220 may be configured to send the management frame to a second multi-link device on a link between the receiver address and the transmitter address.

In some embodiments, the link indication information includes a first address. The first address includes address indication information. The address indication information indicates whether the first address is an MLD MAC address of an access point AP MLD or an MAC address of an AP. The MAC address of the AP is an MAC address of an AP affiliated with the AP MLD, or an MAC address of a single-link AP, or an MAC address of an AP not affiliated with any AP MLD.

In another understanding, the address indication information may indicate the type of the management frame. Specifically, the address indication information is the first value indicating that the management frame is the MLD-level management frame, and the address indication information is the second value indicating that the management frame is the link-level management frame. The first value is different from the second value. For example, the first value is 1, and the second value is 0. For another example, the first value is 0, and the second value is 1.

In some embodiments, the address indication information is carried in an individual/group I/G bit of an MAC address in an address 3 field of the management frame. In some other embodiments, the address indication information may be carried in From DS and To DS of frame control of the management frame.

In some embodiments, the link indication information includes address indication information and a first address, and the address indication information indicates whether the first address is an MLD MAC address of an AP MLD or an MAC address of an AP. The MAC address of the AP is an MAC address of an AP affiliated with the AP MLD, or an MAC address of a single-link AP, or an MAC address of an AP not affiliated with any AP MLD.

In another implementation, the address indication information indicates whether the management frame is an MLD-level management frame or a link-level management frame.

In some embodiments, the address indication information is carried in an I/G bit of an MAC address in an address 2 field of the management frame.

In some embodiments, the address indication information is a first value, the first address is not all 1s, and the first address is the MLD MAC address of the AP MLD.

In some embodiments, the link indication information further includes link identifier information, and the link identifier information indicates that the management frame is applied to one or more links.

In some embodiments, the link indication information further includes link identifier information, the link identifier information is carried in a first element of the management frame, and the link identifier information indicates that the first element is applied to one or more links.

In some embodiments, a second element of the management frame does not carry link identifier information, indicating that the second element is applied to all links that establish an association between the first multi-link device and the second multi-link device.

In some embodiments, the link identifier information includes at least one of the following: a link identifier or a link identifier bitmap.

In some embodiments, the address indication information is a second value, the first address is not all 1s, and the first address is an MAC address of an AP. The MAC address of the AP is an MAC address of an AP affiliated with an AP MLD, or an MAC address of a single-link AP, or an MAC address of an AP not affiliated with any AP MLD. The management frame is applied to a link on which the AP affiliated with the AP MLD operates or a link on which the single-link AP or the AP not affiliated with any AP MLD operates.

In some embodiments, the generation unit 1210 is configured to: construct AAD, where the AAD includes a receiver address, a transmitter address, and a second address; generate MIC based on the AAD; and generate the management frame based on the MIC.

In some embodiments, the second address is the same as the first address.

In some embodiments, if the first address includes the address indication information, the address indication information in the first address is set to a default value and then used as the second address.

In some embodiments, the receiver address is carried in an address 1 field of the management frame, and the transmitter address is carried in the address 2 field of the management frame.

In some embodiments, the apparatus 1200 may further include a receiving unit 1230, configured to receive a reply acknowledgment frame from the second multi-link device.

For example, the apparatus 1200 in FIG. 12 may be configured to implement the processes described with reference to the first multi-link device in FIG. 4 to FIG. 9. For brevity, details are not described herein again.

FIG. 13 is another schematic block diagram of a communication apparatus 1300 according to an embodiment of this disclosure. The apparatus 1300 may be implemented in a second multi-link device, or may be implemented as a chip or a chip system in the second multi-link device. The scope of this disclosure is not limited in this aspect.

As shown in FIG. 13, the apparatus 1300 includes a receiving unit 1310 and a processing unit 1320. The receiving unit 1310 may be configured to receive a management frame from a first multi-link device on a link between a receiver address and a transmitter address. The management frame includes the receiver address, the transmitter address, and link indication information. The link indication information indicates at least one link to which the management frame is applied. The processing unit 1320 may be configured to apply the management frame to at least one corresponding link based on the link indication information.

In some embodiments, the link indication information includes the first address. In an implementation, the first address includes address indication information. The address indication information indicates whether the first address is an MLD MAC address of an AP MLD or an MAC address of an AP affiliated with an AP MLD. In another implementation, the address indication information indicates whether the management frame is an MLD-level management frame or a link-level management frame.

In some embodiments, the address indication information is carried in an individual/group I/G bit of an MAC address in an address 3 field of the management frame. The processing unit 1320 is further configured to set the I/G bit in the address 3 field of the management frame to a default value, to obtain the first address in the address 3 field of the management frame.

In some embodiments, the link indication information includes address indication information and a first address, and the address indication information indicates whether the first address is an MLD MAC address of an AP MLD or an MAC address of an AP. The MAC address of the AP is an MAC address of an AP affiliated with the AP MLD, or an MAC address of a single-link AP, or an MAC address of an AP not affiliated with any AP MLD.

In another embodiment, the first address of the management frame is always set to the MAC address of the AP. The MAC address of the AP is an MAC address of an AP affiliated with the AP MLD, or an MAC address of a single-link AP, or an MAC address of an AP not affiliated with any AP MLD. In this case, the address indication information does not need to indicate which address the first address is. Optionally, the address indication information may indicate whether the management frame is an MLD-level management frame or a link-level management frame. In other words, the address indication information may indicate whether the management frame includes the link indication information.

In some embodiments, the address indication information is carried in an I/G bit of an MAC address in an address 2 field of the management frame.

In some embodiments, the address indication information is a first value, the first address is not all 1s, and the first address is the MLD MAC address of the AP MLD.

In some embodiments, the processing unit 1320 is configured to: if the link indication information does not include link identifier information, apply the management frame to all links that establish an association between the first multi-link device and the second multi-link device; or if the link indication information includes link identifier information, apply the management frame to one or more links indicated by the link identifier information.

In some embodiments, the processing unit 1320 is configured to: if the link indication information further includes link identifier information, and the link identifier information is carried in a first element of the management frame, apply the first element to one or more links indicated by the link identifier information.

In some embodiments, the processing unit 1320 is configured to: if a second element of the management frame does not carry link identifier information, apply the second element to all links that establish an association between the first multi-link device and the second multi-link device.

In some embodiments, the link identifier information includes at least one of the following: a link identifier or a link identifier bitmap.

In some embodiments, the address indication information is a second value, the first address is not all 1s, and the first address is the MAC address of the AP. The MAC address of the AP is the MAC address of the AP affiliated with the AP MLD, or the MAC address of the single-link AP, or the MAC address of the AP not affiliated with any AP MLD. In addition, the processing unit 1320 is configured to: apply the management frame to a link on which the affiliated AP operates; or apply the management frame to a link on which the single-link AP or the AP not affiliated with any AP MLD operates.

In some embodiments, the management frame further includes first MIC. The processing unit 1320 is further configured to: construct AAD, where the AAD includes a receiver address, a transmitter address, and a second address; generate second MIC based on the AAD; and perform security verification on the management frame based on the first MIC and the second MIC.

In some embodiments, the second address is the same as the first address. In some other embodiments, the first address of the management frame is always set to the MAC address of the AP, and the second address is always set to the MAC address of the AP.

In some embodiments, if the first address includes the address indication information, the address indication information in the first address is set to a default value and then used as the second address.

In some embodiments, the management frame further includes a first address. All bits of the first address are 1s. The processing unit 1320 is further configured to: determine, by the second multi-link device, that the first address is a wildcard BSSID.

In some embodiments, the receiver address is carried in an address 1 field of the management frame, and the transmitter address is carried in the address 2 field of the management frame.

In some embodiments, the apparatus 1300 may further include a sending unit 1330, configured to send a reply acknowledgment frame to the first multi-link device.

For example, the apparatus 1300 in FIG. 13 can be configured to implement the processes described with reference to the second multi-link device in FIG. 4 to FIG. 9. For brevity, details are not described herein again.

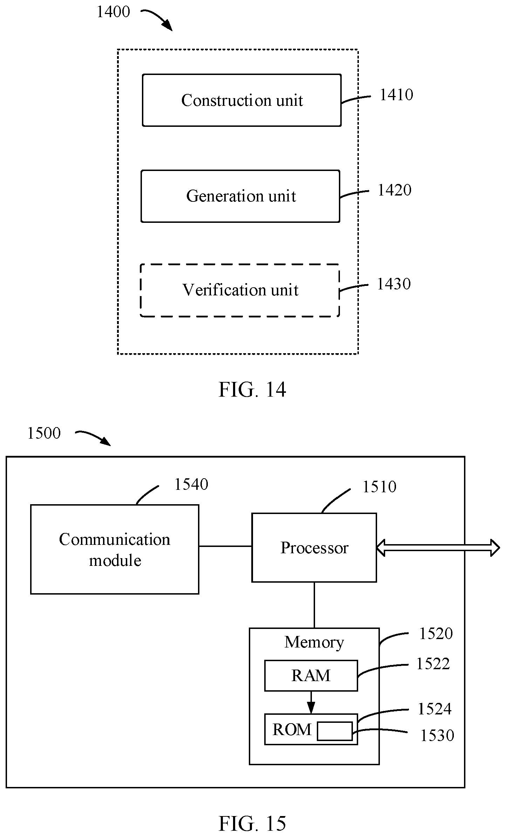

FIG. 14 is still another schematic block diagram of a communication apparatus 1400 according to an embodiment of this disclosure. The apparatus 1400 may be implemented in a first multi-link device or a second multi-link device, or may be implemented as a chip or a chip system in the first multi-link device or the second multi-link device. The scope of this disclosure is not limited in this aspect.

As shown in FIG. 14, the apparatus 1400 includes a construction unit 1410 and a generation unit 1420. The construction unit 1410 is configured to construct AAD, where the AAD includes a receiver address, a transmitter address, and a second address, and the second address is an MLD MAC address of an AP MLD or an MAC address of an AP. The generation unit 1420 is configured to generate MIC based on the ADD. The MAC address of the AP is an MAC address of an AP affiliated with the AP MLD, or an MAC address of a single-link AP, or an MAC address of an AP not affiliated with any AP MLD.

In some embodiments, the apparatus 1400 may further include a verification unit 1430, configured to perform security verification on the received management frame based on the generated MIC and MIC in the received management frame.

In some embodiments, the receiver address is carried in an address 1 field of the AAD, the transmitter address is carried in an address 2 field of the AAD, and the second address is carried in an address 3 field of the AAD.

In some embodiments, the second address is determined based on a first address that is to be carried in an address 3 field of the management frame.

In some embodiments, the second address is the same as the first address. In some other embodiments, the first address of the management frame is always set to the MAC address of the AP, and the second address is always set to the MAC address of the AP.

In some embodiments, the first address includes address indication information, and the second address is obtained by masking the address indication information in the first address to 0.

In some embodiments, the first address does not include address indication information, and the second address is obtained by setting an I/G bit in the first address to a value of the address indication information. In this way, the second address may include the address indication information, indicating whether the second address is the MLD MAC address of the AP MLD or the MAC address of the AP. The MAC address of the AP is an MAC address of an AP affiliated with the AP MLD, or an MAC address of a single-link AP, or an MAC address of an AP not affiliated with any AP MLD.

In some embodiments, the first address includes address indication information, and the second address is obtained by masking the address indication information in the first address to 0. The AAD includes address indication information, and the address indication information is carried in an I/G bit in the address 2 field of the AAD. In this way, the transmitter address may include the address indication information, indicating whether the second address is the MLD MAC address of the AP MLD or the MAC address of the AP. The MAC address of the AP is an MAC address of an AP affiliated with the AP MLD, or an MAC address of a single-link AP, or an MAC address of an AP not affiliated with any AP MLD.

In some embodiments, the transmitter address is determined based on an address that is to be carried in an address 2 field of the management frame.

In some embodiments, the transmitter address is the same as the address in the address 2 field of the management frame.

In some embodiments, the address in the address 2 field of the management frame includes address indication information, and the transmitter address is obtained by masking the address indication information in the address in the address 2 field of the management frame to 0.

In some embodiments, the address in the address 2 field of the management frame does not include address indication information, and the transmitter address is obtained by setting the address indication information in the address in the address 2 field of the management frame to a value of the address indication information. In this way, the transmitter address may include the address indication information, indicating whether the second address is the MLD MAC address of the AP MLD or the MAC address of the AP. The MAC address of the AP is an MAC address of an AP affiliated with the AP MLD or an MAC address of an AP not affiliated with any AP MLD.

In some embodiments, the address in the address 2 field of the management frame includes address indication information, and the transmitter address is obtained by masking the address indication information in the address in the address 2 field of the management frame to 0. In addition, the AAD includes address indication information, and the address indication information is carried in an I/G bit in the address 3 field of the AAD.

Specifically, for constructing the AAD by the construction unit 1410, refer to the foregoing descriptions with reference to FIG. 9. For brevity, details are not described herein again.

It may be understood that the apparatus 1400 may be implemented as a part of the foregoing apparatus 1200. For example, the generation unit 1210 includes the construction unit 1410 and the generation unit 1420. The apparatus 1400 may be implemented as a part of the foregoing apparatus 1300. For example, the processing unit 1320 includes the construction unit 1410, the generation unit 1420, and a verification unit 1430. For a process that can be implemented by the apparatus 1400, refer to related descriptions in the foregoing embodiment.

FIG. 15 is a simplified block diagram of an example apparatus 1500 according to an embodiment of this disclosure. The apparatus 1500 may be configured to implement a first multi-link device and a second multi-link device in the foregoing embodiments, for example, may be configured to implement an AP MLD and a non-AP MLD. As shown in the figure, the apparatus 1500 includes one or more processors 1510, one or more memories 1520 coupled to the processors 1510, and a communication module 1540 coupled to the processors 1510.

The communication module 1540 may be configured to perform bidirectional communication. The communication module 1540 may have at least one communication interface for communication. The communication interface may include any interface necessary for communicating with another device.

The processor 1510 may be of any type suitable for a local technology network, and may include but is not limited to at least one of the following: one or more of a general-purpose computer, a dedicated computer, a microcontroller, a digital signal processor (Digital Signal Processor, DSP), or a controller-based multi-core controller architecture. The apparatus 1500 may have a plurality of processors, such as application-specific integrated circuit chips, which in time belong to a clock synchronized with a main processor.

The memory 1520 may include one or more nonvolatile memories and one or more volatile memories. An example of the nonvolatile memory includes but is not limited to at least one of the following: a read-only memory (Read-Only Memory, ROM) 1524, an erasable programmable read-only memory (Erasable Programmable Read Only Memory, EPROM), a flash memory, a hard disk, a compact disc (Compact Disc, CD), a digital versatile disc (Digital Versatile Disc, DVD), or another magnetic storage and/or optical storage. Examples of the volatile memory include but are not limited to at least one of the following: a random access memory (RAM) 1522, or another volatile memory that does not last for power-off duration.

A computer program 1530 includes computer-executable instructions executed by an associated processor 1510. The program 1530 may be stored in the ROM 1524. The processor 1510 may perform any proper actions and processing by loading the program 1530 into the RAM 1522.

Embodiments of this disclosure may be implemented with the help of the program 1530, so that the apparatus 1500 may perform any process described with reference to FIG. 4 to FIG. 11. Embodiments of this disclosure may alternatively be implemented by using hardware or a combination of software and hardware.

In some embodiments, the program 1530 may be tangibly included in a computer-readable medium. The computer-readable medium may be included in the apparatus 1500 (for example, in the memory 1520) or another storage device that may be accessed by the apparatus 1500. The program 1530 may be loaded from the computer-readable medium into the RAM 1522 for execution. The computer-readable medium may include any type of tangible nonvolatile memory, such as a ROM, an EPROM, a flash memory, a hard disk, a CD, or a DVD.

In some embodiments, the communication module 1540 in the apparatus 1500 may be implemented as a transmitter and a receiver (or a transceiver), and may be configured to send/receive system information, such as a management frame and an acknowledgment frame. In addition, the apparatus 1500 may further include one or more of a scheduler, a controller, and a radio frequency/antenna. Details are not described again in this disclosure.

In another implementation, the radio frequency/antenna may be disposed independent of the processor that performs baseband processing. For example, in a distributed scenario, the radio frequency/antenna may be separately disposed independent of the apparatus 1500.

For example, the apparatus 1500 in FIG. 15 may be implemented as a first multi-link device or a second multi-link device, or may be implemented as a chip or a chip system in the first multi-link device, or may be implemented as a chip or a chip system in the second multi-link device. This is not limited in this embodiment of this disclosure.

For example, the apparatus 1500 in FIG. 15 may be implemented as the AP MLD or the non-AP MLD, or may be implemented as a chip or a chip system in the AP MLD, or may be implemented as a chip or a chip system in the non-AP MLD. This is not limited in this embodiment of this disclosure.

An embodiment of this disclosure further provides a chip. The chip may include an input interface, an output interface, and a processing circuit. In this embodiment of this disclosure, the input interface and the output interface may complete the foregoing signaling or data interaction, and the processing circuit may complete generation and processing of signaling or data information.

An embodiment of this disclosure further provides a chip system, including a processor, configured to support a first multi-link device or a second multi-link device to implement a function in any one of the foregoing embodiments. In a possible design, the chip system may further include a memory. The memory is configured to store necessary program instructions and data. When the processor runs the program instructions, a device on which the chip system is installed is enabled to perform the method in any one of the foregoing embodiments. The chip system may include a chip, or may include a chip and another discrete component.

An embodiment of this disclosure further provides a processor, configured to be coupled to a memory. The memory stores instructions. When the processor runs the instructions, the processor is enabled to perform the method and function related to a first multi-link device or a second multi-link device in any one of the foregoing embodiments.

An embodiment of this disclosure further provides a computer program product including instructions. When the computer program product is run on a computer, the computer is enabled to perform the method and function related to a first multi-link device or a second multi-link device in any one of the foregoing embodiments.

An embodiment of this disclosure further provides a computer-readable storage medium. The computer-readable storage medium stores computer instructions. When a processor runs the instructions, the processor is enabled to perform the method and function related to a first multi-link device or a second multi-link device in any one of the foregoing embodiments.

An embodiment of this disclosure further provides a wireless communication system. The system includes a first multi-link device and a second multi-link device. In some examples, the system may include an AP MLD and a non-AP MLD.

Generally, various embodiments of this disclosure may be implemented by hardware or a dedicated circuit, software, logic, or any combination thereof. Some aspects may be implemented by hardware, and other aspects may be implemented by firmware or software, and may be performed by a controller, a microprocessor, or another computing device. Although aspects of embodiments of this disclosure are shown and illustrated as block diagrams, flowcharts, or other diagrams, it should be understood that the blocks, apparatuses, systems, technologies, or methods described in this specification may be implemented as, for example, non-limiting examples, hardware, software, firmware, dedicated circuits, logic, general-purpose hardware, controllers, other computing devices, or a combination thereof.

This disclosure further provides at least one computer program product tangibly stored on a non-transitory computer-readable storage medium. The computer program product includes computer-executable instructions, such as instructions included in a program module, executed in a device on a real or virtual target processor to perform the process/method as described above with reference to FIG. 4 to FIG. 11. Generally, the program module includes a routine, a program, a library, an object, a class, a component, a data structure, and the like that execute a particular task or implement a particular abstract data type. In various embodiments, functions of program modules may be combined or a function of a program module may be split as needed. Machine-executable instructions for the program module may be executed locally or within a distributed device. In the distributed device, the program modules may be located in local and remote storage media.

Computer program code used to implement the methods disclosed in this disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed completely on a computer, partially on a computer, as an independent software package, partially on a computer and partially on a remote computer, or completely on a remote computer or server.

In a context of this disclosure, the computer program code or related data may be carried by any appropriate carrier, so that a device, an apparatus, or a processor can perform various processing and operations described above. Examples of the carrier include a signal, a computer-readable medium, and the like. Examples of the signal may include propagating signals in electrical, optical, radio, sound, or other forms, such as carrier waves and infrared signals.

The computer-readable medium may be any tangible medium that includes or stores a program used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus, or device, or any suitable combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or flash memory), an optical storage device, a magnetic storage device, or any suitable combination thereof.

In addition, although the operations of the methods disclosed in this disclosure are described in a particular order in the accompanying drawings, this does not require or imply that these operations need to be performed in the particular order or that all of the shown operations need to be performed to achieve a desired result. Instead, execution orders of the steps depicted in the flowcharts may change. Addition or optionally, some steps may be omitted, a plurality of steps may be combined into one step for execution, and/or one step may be decomposed into a plurality of steps for execution. It should further be noted that features and functions of two or more apparatuses according to this disclosure may be specified in one apparatus. On the contrary, features and functions of one apparatus described above may be further divided into a plurality of apparatuses for materialization.

The implementations of this disclosure are described above. The foregoing descriptions are examples, are not exhaustive, and are not limited to the disclosed implementations. Many modifications and variations are apparent to a person of ordinary skill in the art without departing from the scope and spirit of the described implementations. Selection of terms used in this specification is intended to well explain implementation principles, actual application, or improvements to technologies in the market, or to enable another person of ordinary skill in the art to understand the implementations disclosed in this specification.

## Claims

1. A data transmission method, comprising:
generating, by a first multi-link device, a management frame, wherein the management frame comprises a receiver address, a transmitter address, and link indication information, and the link indication information indicates that the management frame is applied to at least one link corresponding to the link indication information; and
sending, by the first multi-link device, the management frame to a second multi-link device on a link on which a station indicated by the receiver address or a station indicated by the transmitter address operates.

2. The method according to claim 1, wherein the link indication information comprises link identifier information, and the link identifier information indicates that the management frame is applied to one or more links.

3. The method according to claim 2, wherein the link identifier information comprises at least one of the following: one or more link identifiers or a link identifier bitmap.

4. The method according to any one of claims 1 to 3, wherein
the management frame comprises a first address, the first address carries a media access control (MAC) address of an access point (AP) that transmits the management frame, and the AP is affiliated with an AP multi-link device (MLD).

5. The method according to claim 4, wherein the first address is carried in an address 3 field of the management frame.

6. The method according to claim 4 or 5, wherein
for downlink transmission, the first address of the management frame carries a media access control (MAC) address of an access point (AP) that sends the management frame;
for uplink transmission, the first address of the management frame carries an MAC address of an AP that receives the management frame; and
the AP is affiliated with the AP multi-link device (MLD).

7. The method according to any one of claims 1 to 6, wherein
for downlink transmission, an address carried in the receiver address of the management frame is an MAC address of a non-access point station (non-AP STA) of a receive end, and an address carried in the transmitter address of the management frame is an MAC address of an access point (AP) of a transmit end; or
for uplink transmission, an address carried in the receiver address of the management frame is an MAC address of an access point (AP) of a receive end, and an address carried in the transmitter address of the management frame is an MAC address of a non-access point station (non-AP STA) of a transmit end; and
the transmit end is the first multi-link device, and the receive end is the second multi-link device.

8. The method according to any one of claims 1 to 7, wherein the link indication information further comprises address indication information, and the address indication information indicates whether the management frame is an MLD-level management frame or a link-level management frame.

9. The method according to any one of claims 1 to 7, wherein the link indication information further comprises link identifier information, the link identifier information is carried in a first element of the management frame, and the link identifier information indicates that the first element is applied to one or more links.

10. The method according to any one of claims 1 to 7, wherein a second element of the management frame does not carry link identifier information, indicating that the second element is applied to all links that establish an association between the first multi-link device and the second multi-link device.

11. The method according to any one of claims 1 to 10, wherein the generating a management frame comprises:
constructing additional authentication data (AAD), wherein the AAD comprises an address 1, an address 2, and a second address;
generating message integrity check (MIC) based on the AAD; and
generating the management frame based on the MIC.

12. The method according to claim 11, wherein the second address is the same as the first address.

13. The method according to claim 11 or 12, wherein
for downlink transmission, the second address carries the MAC address of the AP that sends the management frame;
for uplink transmission, the second address carries the MAC address of the AP that receives the management frame; and
the AP is affiliated with the AP MLD.

14. The method according to any one of claims 11 to 13, wherein
for downlink transmission, an address carried in the address 1 is an MAC address of a non-access point station (non-AP STA) of the receive end, and an address carried in the address 2 is an MAC address of an access point (AP) of the transmit end;
for uplink transmission, an address carried in the address 1 is an MAC address of an access point (AP) of the receive end, and an address carried in the address 2 is an MAC address of a non-access point station (non-AP STA) of the transmit end; and
the transmit end is the first multi-link device, and the receive end is the second multi-link device.

15. The method according to any one of claims 11 to 13, wherein
for downlink transmission, an address carried in the address 1 is an MAC address of a non-access point multi-link device (non-AP MLD) of the receive end, and an address carried in the address 2 is an MAC address of an access point multi-link device (AP MLD) of the transmit end;
for uplink transmission, an address carried in the address 1 is an MAC address of an access point multi-link device (AP MLD) of the receive end, and an address carried in the address 2 is an MAC address of a non-access point multi-link device (non-AP MLD) of the transmit end; and
the transmit end is the first multi-link device, and the receive end is the second multi-link device.

16. A communication method, comprising:
constructing, by a first multi-link device, additional authentication data (AAD), wherein the AAD comprises an address 1, an address 2, and a second address;
generating, by the first multi-link device, message integrity check MIC based on the AAD;
generating, by the first multi-link device, a management frame, wherein the management frame comprises a receiver address, a transmitter address, a first address, and the MIC; and
sending, by the first multi-link device, the management frame to a second multi-link device on a link on which a station indicated by the receiver address or a station indicated by the transmitter address operates.

17. The method according to claim 16, wherein the first address of the management frame is carried in an address 3 field of the management frame, the first address carries a media access control (MAC) address of an access point (AP) that transmits the management frame, and the AP is affiliated with an AP multi-link device (MLD).

18. The method according to claim 16 or 17, wherein the first address is the same as the second address.

19. The method according to any one of claims 16 to 18, wherein
for downlink transmission, the second address carries a media access control (MAC) address of an access point (AP) that sends the management frame;
for uplink transmission, the second address carries an MAC address of an AP that receives the management frame; and
the AP is affiliated with the AP multi-link device (MLD).

20. The method according to any one of claims 16 to 19, wherein
for downlink transmission, an address carried in the address 1 is an MAC address of a non-access point station (non-AP STA) of a receive end, and an address carried in the address 2 is an MAC address of an access point (AP) of a transmit end; or
for uplink transmission, an address carried in the address 1 is an MAC address of an access point (AP) of a receive end, and an address carried in the address 2 is an MAC address of a non-access point station (non-AP STA) of a transmit end; and
the transmit end is the first multi-link device, and the receive end is the second multi-link device.

21. The method according to any one of claims 16 to 19, wherein
for downlink transmission, an address carried in the address 1 is an MAC address of a non-access point multi-link device (non-AP MLD) of a receive end, and an address carried in the address 2 is an MAC address of an access point multi-link device (AP MLD) of a transmit end; or
for uplink transmission, an address carried in the address 1 is an MAC address of an access point multi-link device (AP MLD) of a receive end, and an address carried in the address 2 is an MAC address of a non-access point multi-link device (non-AP MLD) of a transmit end; and
the transmit end is the first multi-link device, and the receive end is the second multi-link device.

22. A data transmission method, comprising:
receiving, by a second multi-link device, a management frame from a first multi-link device on a link on which a station in the second multi-link device operates, wherein the management frame comprises a receiver address, a transmitter address, and link indication information, the receiver address is an address of the station in the second multi-link device, and the link indication information indicates that the management frame is applied to at least one link corresponding to the link indication information; and
applying, by the second multi-link device, the management frame to the at least one corresponding link based on the link indication information.

23. The method according to claim 22, wherein the link indication information comprises link identifier information, and the link identifier information indicates that the management frame is applied to one or more links.

24. The method according to claim 23, wherein the link identifier information comprises at least one of the following: one or more link identifiers or a link identifier bitmap.

25. The method according to any one of claims 22 to 24, wherein
the management frame comprises a first address, the first address carries a media access control (MAC) address of an access point (AP) that transmits the management frame, and the AP is affiliated with an AP multi-link device (MLD).

26. The method according to claim 25, wherein the first address is carried in an address 3 field of the management frame.

27. The method according to claim 25 or 26, wherein
for downlink transmission, the first address of the management frame carries a media access control (MAC) address of an access point (AP) that sends the management frame;
for uplink transmission, the first address of the management frame carries an MAC address of an AP that receives the management frame; and
the AP is affiliated with the AP multi-link device (MLD).

28. The method according to any one of claims 22 to 27, wherein
for downlink transmission, an address carried in the receiver address of the management frame is an MAC address of a non-access point station (non-AP STA) of a receive end, and an address carried in the transmitter address of the management frame is an MAC address of an access point (AP) of a transmit end; or
for uplink transmission, an address carried in the receiver address of the management frame is an MAC address of an access point (AP) of a receive end, and an address carried in the transmitter address of the management frame is an MAC address of a non-access point station (non-AP STA) of a transmit end; and
the transmit end is the first multi-link device, and the receive end is the second multi-link device.

29. The method according to any one of claims 22 to 28, wherein the link indication information further comprises address indication information, and the address indication information indicates whether the management frame is an MLD-level management frame or a link-level management frame.

30. The method according to any one of claims 22 to 28, wherein the link indication information further comprises link identifier information, the link identifier information is carried in a first element of the management frame, and the link identifier information indicates that the first element is applied to one or more links.

31. The method according to any one of claims 22 to 28, wherein a second element of the management frame does not carry link identifier information, indicating that the second element is applied to all links that establish an association between the first multi-link device and the second multi-link device.

32. The method according to any one of claims 22 to 31, wherein the method further comprises:
constructing additional authentication data (AAD), wherein the AAD comprises an address 1, an address 2, and a second address;
generating message integrity check (MIC) based on the AAD; and
performing security verification on the management frame based on the MIC.

33. The method according to claim 32, wherein the second address is the same as the first address.

34. The method according to claim 32 or 33, wherein
for downlink transmission, the second address carries the MAC address of the AP that sends the management frame;
for uplink transmission, the second address carries the MAC address of the AP that receives the management frame; and
the AP is affiliated with the AP MLD.

35. The method according to any one of claims 32 to 34, wherein
for downlink transmission, an address carried in the address 1 is an MAC address of a non-access point station (non-AP STA) of the receive end, and an address carried in the address 2 is an MAC address of an access point (AP) of the transmit end;
for uplink transmission, an address carried in the address 1 is an MAC address of an access point (AP) of a receive end, and an address carried in the address 2 is an MAC address of a non-access point station (non-AP STA) of a transmit end; and
the transmit end is the first multi-link device, and the receive end is the second multi-link device.

36. The method according to any one of claims 32 to 34, wherein
for downlink transmission, an address carried in the address 1 is an MAC address of a non-access point multi-link device (non-AP MLD) of the receive end, and an address carried in the address 2 is an MAC address of an access point multi-link device (AP MLD) of the transmit end;
for uplink transmission, an address carried in the address 1 is an MAC address of an access point multi-link device (AP MLD) of the receive end, and an address carried in the address 2 is an MAC address of a non-access point multi-link device (non-AP MLD) of the transmit end; and
the transmit end is the first multi-link device, and the receive end is the second multi-link device.

37. A communication method, comprising:
receiving, by a second multi-link device, a management frame from a first multi-link device on a link on which a station in the second multi-link device operates, wherein the management frame comprises a receiver address, a transmitter address, a first address, and first message integrity check MIC;
constructing, by the second multi-link device, additional authentication data (AAD), wherein the AAD comprises an address 1, an address 2, and a second address;
generating, by the second multi-link device, second MIC based on the AAD; and
performing, by the second multi-link device, security verification on the management frame based on the second MIC and the first MIC in the received management frame.

38. The method according to claim 37, wherein the first address of the management frame is carried in an address 3 field of the management frame, the first address carries a media access control (MAC) address of an access point (AP) that transmits the management frame, and the AP is affiliated with an AP multi-link device (MLD).

39. The method according to claim 37 or 38, wherein the first address is the same as the second address.

40. The method according to any one of claims 37 to 39, wherein
for downlink transmission, the second address carries a media access control (MAC) address of an access point (AP) that sends the management frame;
for uplink transmission, the second address carries an MAC address of an AP that receives the management frame; and
the AP is affiliated with the AP multi-link device (MLD).

41. The method according to any one of claims 37 to 40, wherein
for downlink transmission, an address carried in the address 1 is an MAC address of a non-access point station (non-AP STA) of a receive end, and an address carried in the address 2 is an MAC address of an access point (AP) of a transmit end; or
for uplink transmission, an address carried in the address 1 is an MAC address of an access point (AP) of a receive end, and an address carried in the address 2 is an MAC address of a non-access point station (non-AP STA) of a transmit end; and
the transmit end is the first multi-link device, and the receive end is the second multi-link device.

42. The method according to any one of claims 37 to 40, wherein
for downlink transmission, an address carried in the address 1 is an MAC address of a non-access point multi-link device (non-AP MLD) of a receive end, and an address carried in the address 2 is an MAC address of an access point multi-link device (AP MLD) of a transmit end; or
for uplink transmission, an address carried in the address 1 is an MAC address of an access point multi-link device (AP MLD) of a receive end, and an address carried in the address 2 is an MAC address of a non-access point multi-link device (non-AP MLD) of a transmit end; and
the transmit end is the first multi-link device, and the receive end is the second multi-link device.

43. A first multi-link device, configured to implement the method according to any one of claims 1 to 15.

44. A first multi-link device, configured to implement the method according to any one of claims 16 to 21.

45. A second multi-link device, configured to implement the method according to any one of claims 22 to 36.

46. A second multi-link device, configured to implement the method according to any one of claims 37 to 42.

47. A computer-readable storage medium, wherein the computer-readable storage medium stores a computer program, and when the computer program is executed by a processor, the method according to any one of claims 1 to 15, 16 to 21, 22 to 36, and 37 to 42 is implemented.

48. A chip, comprising a processing circuit and a communication interface, wherein the processing circuit is configured to perform the method according to any one of claims 1 to 15, 16 to 21, 22 to 36, and 37 to 42.

49. A computer program product, wherein the computer program product comprises computer-executable instructions, and when the computer-executable instructions are executed, the method according to any one of claims 1 to 15, 16 to 21, 22 to 36, and 37 to 42 is implemented.
